Europäisches Patentamt

European Patent Office

Office européen des brevets

(19)

(11) Numéro de publication: **0 354 073**
**A1**

# (12) DEMANDE DE BREVET EUROPEEN

(21) Numéro de dépôt: 89401753.2

(22) Date de dépôt: 21.06.89

(51) Int. Cl.⁵: **G 06 F 7/00**
**G 06 F 12/02**

(30) Priorité: 01.07.88 FR 8808964

(43) Date de publication de la demande:
07.02.90 Bulletin 90/06

(84) Etats contractants désignés:
AT BE CH DE ES GB GR IT LI LU NL SE

(71) Demandeur: **ELECTRONIQUE SERGE DASSAULT**
**55, quai Marcel Dassault**
**F-92214 Saint-Cloud (FR)**

(72) Inventeur: **Guillerm, Gilles**
**1/2 Square Henri Régnault**
**F-92400 Courbevoie (FR)**

(74) Mandataire: **Plaçais, Jean-Yves et al**
**Cabinet Netter 40, rue Vignon**
**F-75009 Paris (FR)**

Le titre de l'invention a été modifié (Directives relatives à l'examen pratiqué à l'OEB, A-III, 7.3)

(54) **Dispositif de gestion de mémoire vive.**

(57) Le dispositif assure la gestion de l'espace mémoire d'une mémoire de travail subdivisée en N fragments. Il comprend une première mémoire auxiliaire (MA1) à N cellules correspondant aux N fragments. Des moyens de chaînage (MCHA) sont propres à chaîner un ensemble de p fragments alloués à un utilisateur selon un ordre dépendant de la nature de ce premier ensemble ("FIFO","LIFO","liste circulaire"). Des moyens d'accès (MACC) à cet ensemble délivrent alors successivement les identifications successives des fragments selon l'ordre du chaînage.

FIG.1A

EP 0 354 073 A1

**Description**

## Dispositif de mémoire vive électronique.

L'invention concerne la gestion d'une mémoire vive électronique.

Une unité de calcul utilisant une mémoire vive peut être amenée à effectuer des tâches différentes nécessitant chacune une allocation d'une zone prédéterminée de cette mémoire vive. Ce peut être le cas notamment, lorsqu'une unité de calcul est utilisée par plusieurs utilisateurs auxquels sont allouées des zones distinctes de la mémoire, comme par exemple dans le cas d'un calculateur embarqué dans un aéronef et destiné à gérer plusieurs équipements de cet aéronef.

Afin de permettre l'allocation de plusieurs zones distinctes, ladite mémoire vive est subdivisée en un nombre prédéterminé de zones ou fragments possédant chacun une identification permettant de localiser le fragment dans la mémoire.

Les différentes allocations de mémoire ne sont généralement pas de même taille et nécessitent donc un nombre plus ou moins grand de fragments. De plus, au cours du fonctionnement de l'unité de calcul, certains utilisateurs peuvent ne plus avoir besoin d'allocations de mémoire et d'autres peuvent au contraire demander des allocations supplémentaires.

Une allocation est habituellement constituée d'un ensemble de plusieurs fragments chaînés les uns aux autres pour former une liste ou chaîne. Une telle chaîne peut être de type circulaire, c'est-à-dire que le dernier fragment de cette chaîne a comme fragment suivant le premier fragment. Une autre chaîne peut être du type PEPS (Premier Entré-Premier Sorti) communément appelé en langue anglaise FIFO (First In-First Out). L'écriture dans une telle chaîne ou liste s'effectue successivement à partir du premier fragment jusqu'au dernier et la lecture s'effectue également à partir du premier fragment jusqu'au dernier. Une chaîne peut être enfin du type DEPS (Dernier Entré-Premier Sorti) communément appelé en langue anglaise LIFO (Last In-First Out). Si l'écriture dans une telle liste s'effectue également à partir du premier fragment jusqu'au dernier, la lecture s'effectue par contre à partir du dernier fragment jusqu'au premier.

Actuellement la gestion de ces différentes zones de mémoire est effectuée par l'unité de calcul proprement dite à l'aide d'un logiciel approprié. Un tel logiciel utilise généralement des descripteurs qui sont des instructions particulières désignant notamment la nature de la liste, l'adresse du fragment suivant, le caractère actif ou non de ce fragment.

Cette gestion logicielle nécessite un certain temps de travail de l'unité de calcul notamment pour permettre à celle-ci de découvrir l'adresse du fragment suivant. Par ailleurs, lorsque les descripteurs sont stockés également dans la mémoire vive, il y a diminution de la bande passante efficace d'accès à cette mémoire vive par les utilisateurs (cas des disques de gros systèmes de calcul). Ceci peut nécessiter donc des temporisations qui sont pénalisantes quant à la rapidité de traitement des informations, notamment au cours des cycles temps réel d'un calculateur embarqué.

Enfin, lorsqu'une allocation mémoire est abandonnée, il subsiste des vides dans la mémoire vive qu'il faut gérer et qu'il faut parfois éliminer par un traitement approprié tel qu'une compression de mémoire. De telles compressions se rencontrent notamment dans le cas d'un ordinateur central sur site dialoguant avec plusieurs utilisateurs au cours de sessions différentes.

De telles allocations mémoire peuvent être utilisées en tant que mémoire-tampon pour permettre le dialogue entre deux utilisateurs. Un tel dialogue peut s'effectuer par grains. Au sens de la présente invention, un grain désigne une unité d'information d'échange entre au moins deux utilisateurs. Un grain peut être de taille aléatoire ou standard mais c'est toujours un nombre entier de mots. Lors de l'échange de communication entre les deux utilisateurs il est nécessaire de s'assurer qu'un grain a été correctement transmis. Aussi est-il effectué un contrôle de validité sur le grain transmis et ce contrôle est actuellement également géré par l'unité de calcul. Il en résulte donc encore des pertes de temps pour assurer ce contrôle.

L'invention remédie à ces inconvénients en proposant un dispositif de mémoire vive électronique assurant la gestion de l'espace mémoire de cette mémoire vive en déchargeant ainsi totalement l'unité de calcul de cette tâche. Il en résulte donc un gain de temps et une optimisation des performances notamment dans le cas d'un microprocesseur travaillant en temps partagé.

Un autre but de l'invention est d'effectuer par ce même dispositif, un contrôle de validité du grain transmis lors de l'utilisation de la mémoire vive en mémoire-tampon.

D'une façon très générale, l'invention a donc pour objet un dispositif de mémoire vive électronique caractérisé en ce qu'il comprend, en combinaison :
- une mémoire de travail subdivisée en N zones ou fragments, ayant respectivement chacun une identification,
- une première mémoire auxiliaire, dite table de vacance, à N cellules,
- un premier registre d'index propre à désigner respectivement chacune des N cellules, chaque index étant déterminable de façon biunivoque à partir d'une identification,
- un pointeur d'entrée et un pointeur de sortie parcourant le premier registre suivant une boucle fermée de sens prédéterminé,
- des moyens d'initialisation propres à remplir cette première mémoire auxiliaire par la suite des N identifications ainsi qu'à prépositionner les deux pointeurs sur le même index,
- des moyens d'attribution propres à répondre à une requête d'attribution d'un premier ensemble de p fragments en incrémentant séquentiellement de p pas le pointeur de sortie, la sortie de la première mémoire auxiliaire délivrant séquentiellement les p identifications respectives des p fragments attribués,

- des moyens de chaînage recevant les p identifications et chaînant les p fragments les uns aux autres selon un ordre dépendant de la nature dudit premier ensemble,

- des moyens d'accès propres à répondre à une requête d'accès à un deuxième ensemble de r fragments chaînés en délivrant successivement selon l'ordre du chaînage les r identifications successives des r fragments,

- des moyens de libération propres à répondre à une requête de libération d'un troisième ensemble de q fragments chaînés, en désignant successivement les q identifications et en autorisant à chaque fois l'écriture de l'identification désignée dans la cellule de la première mémoire auxiliaire identifiée par l'index correspondant au pointeur d'entrée et en incrémentant ensuite ce pointeur d'entrée,

moyennant quoi les contenus des cellules de la première mémoire auxiliaire comprises, suivant ladite boucle, entre le pointeur de sortie inclus et le pointeur d'entrée exclu, désignent l'ensemble des fragments libres de ladite mémoire de travail.

D'une manière très avantageuse, le dispositif comprend en outre des moyens de commande propres à délivrer aux moyens d'attribution, en réponse à une requête d'attribution, un signal de contrôle associé au premier fragment du premier ensemble. Les moyens d'attribution peuvent alors délivrer en sortie du dispositif, en réponse audit signal de contrôle, l'identification du premier fragment du premier ensemble ce qui permet d'identifier ce premier ensemble.

Dans un mode de réalisation particulièrement préféré de l'invention, les moyens de chaînage comprennent :

- une deuxième mémoire auxiliaire à au moins N emplacements, et

- un deuxième registre d'index propre à désigner respectivement chacun des N emplacements. Les moyens d'attribution relient la sortie de la première mémoire auxiliaire, d'une part au deuxième registre d'index, et d'autre part, à partir du deuxième fragment du premier ensemble, à l'entrée de la deuxième mémoire auxiliaire. Ils autorisent alors, à partir du deuxième fragment du premier ensemble le stockage de l'identification du fragment de rang i dans l'emplacement de la deuxième mémoire auxiliaire identifié par l'index disponible en sortie du deuxième registre d'index et correspondant à l'identification du fragment de rang i-1.

Les moyens d'attribution comprennent de préférence un organe de comptage propre à délivrer un signal de frontière de liste associé au dernier fragment du premier ensemble.

Avantageusement, les moyens d'attribution autorisent, en réponse au signal de frontière de liste, le stockage d'une première information de frontière de liste dans l'emplacement de la deuxième mémoire auxiliaire identifiée par l'index disponible en sortie du deuxième registre d'index et correspondant à l'identification du dernier fragment du premier ensemble.

Les moyens de chaînage comprennent, de préférence, en outre, un premier registre de contrôle possédant ladite information de frontière de liste. Les moyens d'attribution relient alors la sortie du premier registre de contrôle à l'entrée de la deuxième mémoire auxiliaire en réponse au signal de frontière de liste.

Dans une première variante de l'invention, le premier ensemble est du type liste circulaire et l'information de frontière de liste est l'identification du premier fragment du premier ensemble. Dans ce cas, les moyens d'attribution peuvent relier, en réponse au signal de contrôle la sortie de la première mémoire auxiliaire à l'entrée du premier registre de contrôle ce qui permet d'y stocker l'identification du premier fragment.

Selon une autre variante de l'invention, le premier ensemble est du type PEPS et l'information de frontière de liste est stockée par les moyens d'initialisation dans le premier registre de contrôle. Par la suite, elle peut être utilisée à d'autres fins que l'identification du fragment suivant par les moyens d'accès.

Selon une autre variante de l'invention, le premier ensemble est du type DEPS et dans ce cas, les moyens de chaînage sont propres à effectuer un premier chaînage des p fragments destiné à être utilisé pour un travail d'écriture dans le premier ensemble et un deuxième chaînage des p fragments, inverse du premier chaînage, destiné à être utilisé pour un travail de lecture dans le premier ensemble.

Dans un mode de réalisation particulièrement préféré de l'invention, dans le cas où le premier ensemble est du type DEPS, les moyens de chaînage comprennent, outre la deuxième mémoire auxiliaire et le deuxième registre d'index :

- une troisième mémoire auxiliaire à au moins N cases, et

- un troisième registre d'index propre à désigner respectivement chacune de ces N cases. Les moyens d'attribution relient alors la sortie de la première mémoire auxiliaire, d'une part aux deuxième et troisième registres d'index, et d'autre part, à partir respectivement des deuxième et troisième fragments du premier ensemble, aux entrées des deuxième et troisième mémoires auxiliaires. Ils autorisent à partir du troisième fragment du premier ensemble, le stockage des identifications respectives des fragments de rang i et de rang i-2 dans les emplacement et case respectivement des deuxième et troisième mémoires auxiliaires identifiées par l'index disponible en sortie des deuxième et troisième registres et correspondant à l'identification du fragment de rang i-1.

Les moyens d'attribution peuvent autoriser le stockage d'une deuxième information de frontière de liste dans la case de la troisième mémoire auxiliaire identifiée par l'index correspondant à l'identification du fragment de rang 1. Cette deuxième information peut être utilisée lors du travail de lecture dans le premier ensemble par les moyens d'accès.

Très avantageusement, les moyens de chaînage comprennent, en outre, un deuxième et un troisième registres de contrôle. De préférence, l'un des deuxième et troisième registres de contrôle contient ladite deuxième information de frontière de liste. Les moyens d'attribution autorisent, à partir du premier fragment, le stockage temporaire de l'identification du fragment de rang i dans l'un des deuxième et troisième registres de contrôle en même temps que dans les deuxième et troisième registres d'index puis le stockage temporaire de l'identification du fragment de rang i+1 dans l'autre des deuxième et troisième registres de contrôle, également en même temps que dans les deuxième et troisième registres d'index.

Les moyens d'attribution relient alors séquentiellement les sorties des deuxième et troisième registres de contrôle aux entrées des deuxième et troisième mémoires auxiliaires, ainsi que la sortie de la première mémoire auxiliaire alternativement à l'une puis à l'autre des entrées des deuxième et troisième registres de contrôle. En présence du signal de frontière de liste, les moyens d'attribution peuvent autoriser, d'une part le stockage de la première information de frontière de liste dans la deuxième mémoire auxiliaire, et d'autre part le stockage de l'identification du fragment de rang p-1 de la troisième mémoire auxiliaire dans les emplacement et case respectifs de ces mémoires identifiés par l'index disponible en sortie des deuxième et troisième registres d'index et correspondant à l'identification du fragment de rang p, les moyens d'attribution délivrant en sortie du dispositif l'identification du dernier fragment ce qui permet d'identifier ledit premier ensemble lors d'un travail en lecture.

Une requête d'accès peut comporter l'identification du dernier fragment du deuxième ensemble; dans ce cas les moyens d'accès délivrent avantageusement au troisième registre d'index à partir du dernier fragment du deuxième ensemble l'identification du fragment de rang i. La troisième mémoire auxiliaire délivre alors en sortie du dispositif d'une part et au troisième registre d'index d'autre part, l'identification du fragment de rang i-1 contenue dans la case identifiée par l'index correspondant à l'identification du fragment de rang i.

Une requête d'accès peut comporter également l'identification du premier fragment du deuxième ensemble; dans ce cas les moyens d'accès délivrent avantageusement au deuxième registre d'index, à partir du premier fragment du deuxième ensemble, l'identification du fragment de rang i. La deuxième mémoire auxiliaire délivre alors en sortie du dispositif d'une part, et au deuxième registre d'index d'autre part, l'identification du fragment de rang i+1 contenue dans l'emplacement identifié par l'index correspondant à l'identification du fragment i.

Une requête de libération comporte de préférence, l'identification du premier fragment du troisième ensemble. Les moyens de libération délivrent avantageusement l'identification du premier fragment au deuxième registre d'index et à la première mémoire auxiliaire. La deuxième mémoire auxiliaire délivre, à partir du deuxième fragment, d'une part au deuxième registre d'index, et d'autre part à la première mémoire auxiliaire, l'identification du fragment de rang i+1 contenue dans l'emplacement identifié par l'index correspondant à l'identification du fragment de rang i.

Dans un mode préféré de réalisation, chaque index est identique à l'identification correspondante et les fragments sont de même taille. D'une manière particulièrement avantageuse, chaque fragment peut être constitué d'une pluralité de mots et l'identification du fragment est de préférence l'indicateur d'adresse du premier mot dans la mémoire de travail.

Selon une application avantageuse du dispositif conforme à l'invention, la mémoire de travail sert de mémoire-tampon.

Dans ce cas il peut y être effectué au moins une allocation de mémoire choisie pour définir une mémoire-tampon entre un utilisateur travaillant en écriture dans la mémoire-tampon et un utilisateur travaillant en lecture dans la mémoire-tampon. Il peut y être effectué également une deuxième allocation de mémoire choisie pour permettre un travail en lecture et un travail en écriture simultanés par les deux utilisateurs.

Avantageusement, les allocations de mémoire choisies sont gérées par grains dont chacun fait l'objet d'un contrôle de validité.

Selon un mode de réalisation préféré, le dispositif conforme à l'invention comporte un pointeur de grain courant en écriture, un pointeur de grain sauvegardé en écriture, un pointeur de grain courant en lecture, et des moyens pour faire progresser ces pointeurs en fonction dudit contrôle de validité du grain en cours.

Avantageusement, ce contrôle de validité est effectué en fin de travail avec le grain. De préférence, lorsqu'un grain comprend un nombre prédéterminé de mots, chaque mot comportant un nombre prédéterminé de bits, ce contrôle de validité est un test de la somme de tous les bits du grain.

Si un grain comprend un nombre prédéterminé de mots, le pointeur de grain courant en écriture est avantageusement incrémenté d'un pas après chaque écriture d'un mot dans la mémoire-tampon, ce qui permet de stocker les mots du grain à des endroits contigus de la mémoire-tampon. Le pointeur de grain sauvegardé en écriture conserve l'adresse de l'endroit où est stocké le premier mot du grain.

Dans le cas où la mémoire-tampon est du type PEPS, et pour un grain comprenant un nombre prédéterminé de mots, le dispositif comprend en outre un pointeur de grain sauvegardé en lecture et le pointeur de grain courant en lecture est incrémenté d'un pas après chaque lecture d'un mot dans la mémoire-tampon, le pointeur de grain sauvegardé en lecture conservant l'adresse de l'endroit où est stocké le premier mot du grain.

Dans le cas où la mémoire-tampon est du type DEPS, et pour un grain comportant un nombre prédéterminé de mots, le pointeur de grain courant en écriture est identique au pointeur de grain courant en lecture et le pointeur de grain courant en lecture est décrémenté d'un pas avant chaque lecture d'un mot dans la première mémoire-tampon, le pointeur de grain sauvegardé en écriture conservant l'adresse de l'endroit où est stocké le premier mot du grain.

D'autres avantages et caractéristiques de l'invention apparaîtront à l'examen de la description détaillée ci-après et des dessins annexés sur lesquels :

- la figure 1 illustre de façon schématique différentes mémoires du dispositif selon l'invention,

- la figure 1A est un synoptique schématique d'une première variante d'un mode de réalisation préféré du dispositif selon l'invention,

- la figure 2 est un synoptique schématique des moyens de commande des principaux constituants du dispositif de la figure 1A,

- la figure 3 est synoptique schématique d'une partie d'une seconde variante d'un mode préféré de réalisation du dispositif selon l'invention,

- la figure 4 est un algorithme d'un premier mode de fonctionnement du dispositif selon l'invention,

- la figure 4A illustre de façon graphique l'algorithme de la figure 4,

- la figure 5 est un algorithme d'un deuxième mode de fonctionnement du dispositif selon l'invention,

- la figure 5A illustre de façon graphique l'algorithme de la figure 5,

- la figure 6 est un algorithme d'un troisième mode de fonctionnement du dispositif selon l'invention,

- la figure 6A illustre de façon graphique l'algorithme de la figure 6,

- la figure 7 illustre le début d'un algorithme d'un quatrième mode de fonctionnement du dispositif selon l'invention,

- la figure 8 illustre la partie générique de l'algorithme du quatrième mode de fonctionnement du dispositif selon l'invention,

- la figure 9 est un algorithme d'un cinquième mode de fonctionnement du dispositif selon l'invention,

- les figures 10A à 10K illustrent un premier exemple particulier de fonctionnement du dispositif selon l'invention,

- les figures 11A à 11B illustrent un deuxième exemple particulier de fonctionnement du dispositif selon l'invention,

- la figure 12 est un synoptique schématique d'une application du dispositif selon l'invention,

- la figure 13 est un synoptique schématique d'une première variante de l'application de la figure 12,

- la figure 14 est synoptique schématique d'une deuxième variante de l'application de la figure 12,

- la figure 15 est un algorithme d'un premier mode de fonctionnement du dispositif de la figure 12,

- la figure 16 est un algorithme d'un deuxième mode de fonctionnement du dispositif de la figure 12, et,

- la figure 17 est un algorithme d'un troisième mode de fonctionnement du dispositif de la figure 12,

Les dessins comportant pour l'essentiel des éléments de caractère certain font partie intégrante de la description. A ce titre ils pourront servir non seulement à mieux faire comprendre la description détaillée ci-après, mais aussi à contribuer, le cas échéant, à la définition de l'invention.

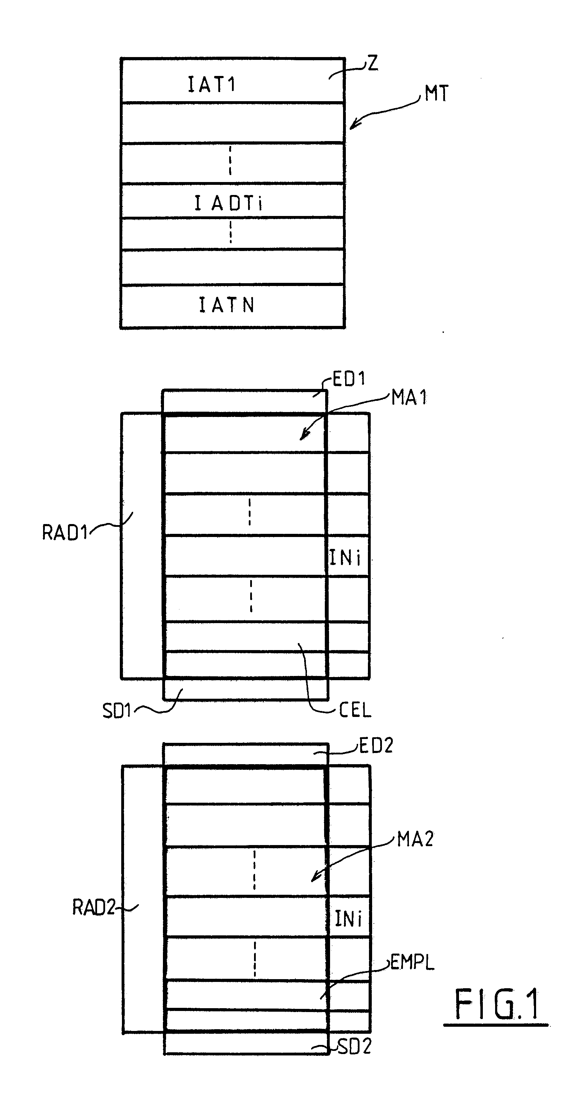

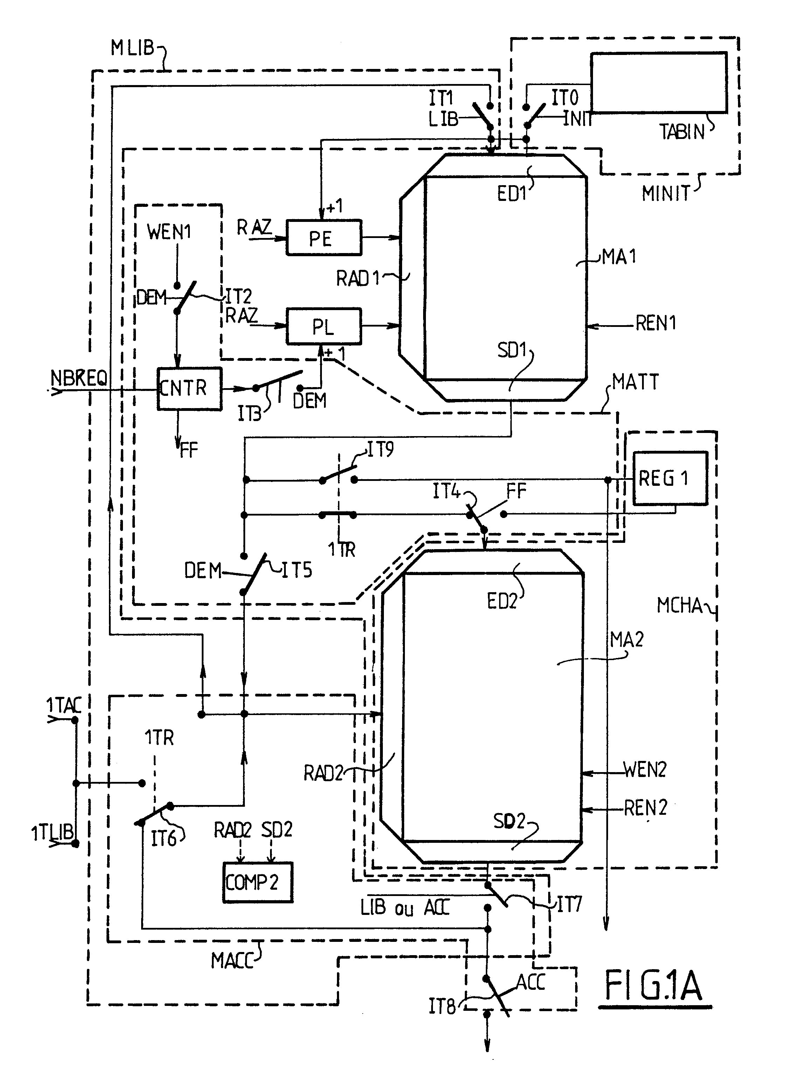

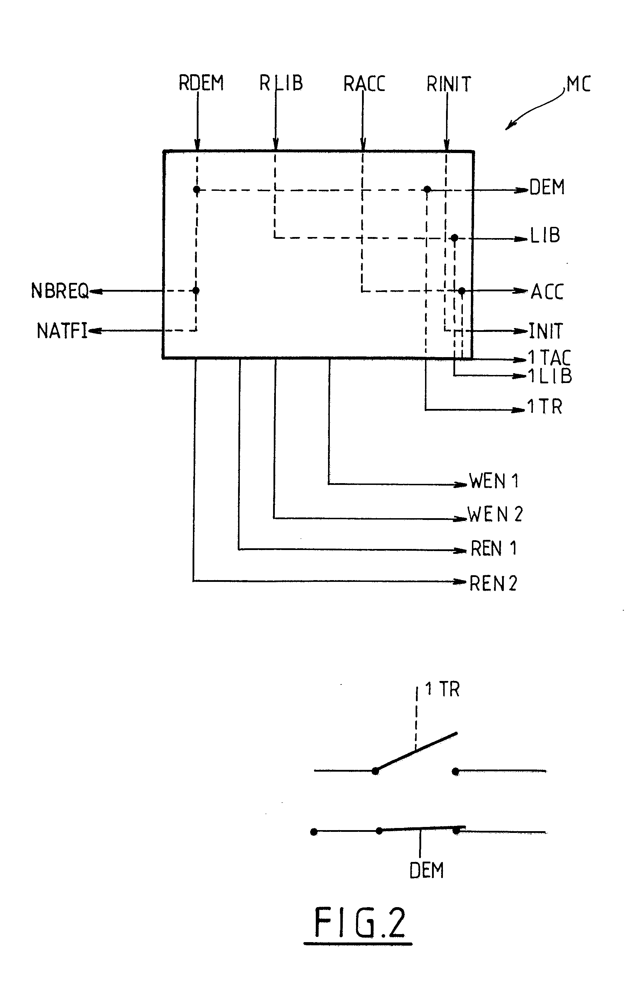

En se référant aux figures 1, 1A et 2 on va maintenant décrire un mode de réalisation particulièrement préféré d'une première variante du dispositif selon l'invention. Ce dispositif comporte une mémoire vive de travail électronique MT subdivisée en un nombre prédéterminé N de zones Z, N étant égal à $2^n$. Ces zones sont communément appelées des fragments et ont généralement une même taille. Chaque fragment est constitué par un nombre prédéterminé M de mots, M étant égal à $2^m$, chaque mot ayant un nombre donné de bits. Un fragment i est identifié par une identification IADTi codée sur n bits qui permet de déterminer sa position dans l'espace mémoire de la mémoire MT, laquelle comprend donc $2^{n+m}$ mots. De préférence, cette identification IADTi est constituée des n bits de poids supérieur de l'adresse en mémoire MT du premier mot du fragment i, cette adresse étant elle-même codée sur (n+m) bits.

Le dispositif comporte également une première mémoire auxiliaire MA1 dite table de vacance, et comportant N cellules CEL. Chaque cellule CEL est affectée d'un index INi qui désigne sa position dans la mémoire MA1. Cette dernière mémoire MA1 comporte également une entrée de données ED1 et une sortie de données SD1. A cette mémoire est associé un premier registre d'index RAD1 propre à désigner respectivement chacune des N cellules par son index. Chaque index est déterminable de façon biunivoque à partir d'une identification. Cependant pour des raisons de simplicité, dans ce mode préféré de réalisation, chaque index INi est respectivement égal à l'identification IADTi.

Le dispositif comporte également une deuxième mémoire auxiliaire MA2, dite table des liens, et comportant au moins N emplacements EMPL, chacun de ces emplacements étant res pectivement affecté du même index INi donc de la même identification IADTi. Cette mémoire MA2 possède également une deuxième entrée de données ED2 ainsi qu'une deuxième sortie de données SD2. A cette mémoire MA2 est également affecté un deuxième registre d'index RAD2 propre à désigner chacun des emplacements par son index respectif.

On se réfère maintenant plus particulièrement à la figure 1A. Le dispositif de mémoire vive comporte également un pointeur d'entrée PE et un pointeur de sortie PS parcourant le premier registre d'index RAD1 suivant une boucle fermée de sens prédéterminé. Ainsi, ces deux pointeurs parcourront le registre d'index par exemple à partir de l'index IADT1 jusqu'à l'index IADTN qui correspond à la cellule de rang N puis reviendront se positionner sur l'index IADT1. Il convient bien entendu de remarquer que cette valeur de référence 1 est prise de façon arbitraire pour des raisons de simplicité.

Le dispositif comporte des moyens d'initialisation MINIT, des moyens d'attribution MATT, des moyens de chaînage MCHA, des moyens d'accès MACC et des moyens de libération MLIB. Ces différents moyens sont pilotés par des moyens de commande MC représentés schématiquement sur la figure 2. Ces moyens de commande MC peuvent recevoir une requête d'initialisation RINIT ou bien une requête d'accès RACC, ou bien une requête de libération RLIB, ou bien une requête d'attribution RDEM. La signification de ces requêtes sera détaillée ci-après. En réponse à ces différentes requêtes, les moyens de commande délivrent une pluralité de signaux logiques qui sont maintenant énumérés ci-après.

En réponse à une requête d'attribution RDEM, les moyens de commande délivrent :
- un signal logique de demande d'attribution DEM, un nombre NBREQ désignant le nombre de fragments attribués, ces fragments désignant un premier ensemble,
- une information de nature du premier ensemble NATFI indiquant si ce premier ensemble est du type liste circulaire ou du type PEPS ou du type DEPS,
- un signal de contrôle logique 1TR associé au premier fragment attribué.

En réponse à une requête de libération RLIB, les moyens de commande délivrent :
- un signal logique de libération LIB,
- l'identification du premier fragment libéré 1LIB qui fait en fait partie de la requête de libération RLIB.

En réponse à une requête d'accès RACC, les moyens de commande délivrent un signal logique d'accès ACC ainsi que l'identification du premier fragment auquel on désire accéder 1TAC et qui fait en fait partie de la requête d'accès RACC.

En réponse à une requête d'initialisation, les moyens de commande délivrent un signal logique d'initialisation INIT.

De façon permanente, quelle que soit la requête, les moyens de commande délivrent des ordres d'écriture WEN1 et de lecture REN1 dans la première mémoire auxiliaire MA1 et des ordres d'écriture WEN2 et de lecture REN2 dans la deuxième mémoire auxiliaire MA2 qui permettent en fonction des chronogrammes temporels de fonctionnement du dispositif l'écriture et/ou la lecture effective des données dans les mémoires respectives. Il est à noter également que le signal de contrôle logique 1TR est également délivré lors d'une requête de libération RLIB ou d'accès RACC.

La partie basse de la figure 2 illustre de façon schématique les notations utilisées sur la figure 1A en ce qui concerne les interrupteurs représentés sur cette figure. D'une façon générale l'interrupteur, commandé par un signal logique, est représenté dans la position qu'il a lorsque ce signal logique a la valeur "faux". Ainsi, l'interrupteur actionné par le signal logique de contrôle 1TR représenté en position ouverte sur la figure 2 signifie que cet interrupteur est effectivement ouvert lorsque le signal 1TR a la valeur "faux" c'est-à-dire lorsqu'il ne s'agit pas du premier fragment. De même, l'interrupteur commandé par le signal logique DEM et représenté en position fermée sur la figure 2 signifie que cet interrupteur est effectivement en position fermée lorsque le signal logique DEM a la valeur "faux" c'est-à-dire lorsqu'il ne s'agit pas d'une requête d'attribution.

En se référant maintenant de nouveau à la figure 1A on voit que les moyens d'initialisation MINIT comprennent une table d'initialisation TABIN comportant les N identifications IADTi des N fragments de la mémoire de travail MT. Cette table TABIN est reliée par l'intermédiaire d'un interrupteur IT0 commandé par le signal logique INIT à l'entrée de données ED1 de la première mémoire auxiliaire. Il convient de remarquer ici, que les différents interrupteurs qui seront décrits ci-après ne doivent être interprétés uniquement que pour leur fonction d'interruption ou de non-interruption d'une liaison entre deux constituants. Bien entendu ces interrupteurs seront réalisés d'un point de vue pratique conformément à la technologie utilisée pour la réalisation du dispositif.

Les moyens d'attribution MATT comprennent un organe de comptage CNTR recevant le nombre de fragments du premier ensemble NBREQ et incrémentant lors d'une demande d'attribution (interrupteur IT3) le pointeur de sortie d'un pas. Cet organe de comptage CNTR délivre également lorsque le nombre maximal de fragments du premier ensemble est atteint un signal de frontière de liste FF. Lors d'une requête d'attribution, la sortie de données SD1 de la matrice MA1 est reliée (interrupteur IT5) au deuxième registre d'index RAD2. Cette sortie de données SD1 est également reliée pour le premier fragment à la sortie du dispositif (interrupteur IT9 commandé par le signal logique de contrôle 1TR) et est également reliée pour les fragments suivants (interrupteur IT9) à l'entrée de données de la deuxième mémoire auxiliaire MA2, et ce jusqu'à l'avant-dernier fragment inclus (interrupteur IT4 commandé par le signal de frontière de liste FF).

Les moyens de chaînage MCHA comprennent la deuxième mémoire auxiliaire MA2, le deuxième registre d'index RAD2 ainsi qu'un premier registre de contrôle REG1. Ce premier registre de contrôle est relié à la sortie de données SD1 de la première mémoire auxiliaire MA1 lors de la fourniture du premier fragment par l'interrupteur IT9 et est relié à l'entrée de données ED2 de la deuxième mémoire auxiliaire MA2 par l'interrupteur IT4 lors du dernier fragment.

Les moyens d'accès MACC relient, par l'intermédiaire de l'interrupteur IT7 et de l'interrupteur IT8 la sortie de données SD2 de la deuxième mémoire auxiliaire à la sortie du dispositif et relient par l'intermédiaire de l'interrupteur IT7 et de l'interrupteur IT6 cette deuxième sortie de données SD2 à l'entrée du registre d'index RAD2. En réponse au signal logique de contrôle 1TR, l'identification 1TAC du premier fragment auquel on désire accéder est délivrée dans le registre d'adresse RAD2 par l'interrupteur IT6.

A cette deuxième mémoire auxiliaire est associé un comparateur COMP2 propre à comparer le contenu du registre d'index RAD2 avec la sortie de données SD2 de la deuxième mémoire auxiliaire.

Les moyens de libération MLIB délivrent, par l'intermédiaire de l'interrupteur IT6 l'identification 1TLIB du premier fragment libéré d'une part au registre d'index RAD2, et d'autre part, par l'intermédiaire de l'interrupteur IT1, à l'entrée de données ED1 de la première mémoire auxiliaire ce qui a pour effet également d'incrémenter d'un pas le pointeur d'entrée PE. Ces moyens de libération MLIB relient également à partir du deuxième fragment libéré, par l'intermédiaire des interrupteurs IT7 et IT6, la sortie de données SD2 de la deuxième mémoire auxiliaire à l'entrée du deuxième registre d'index RAD2.

Ainsi qu'il sera expliqué ci-après, cette première variante du dispositif s'applique lorsque le premier ensemble de fragments attribués est du type liste circulaire ou PEPS.

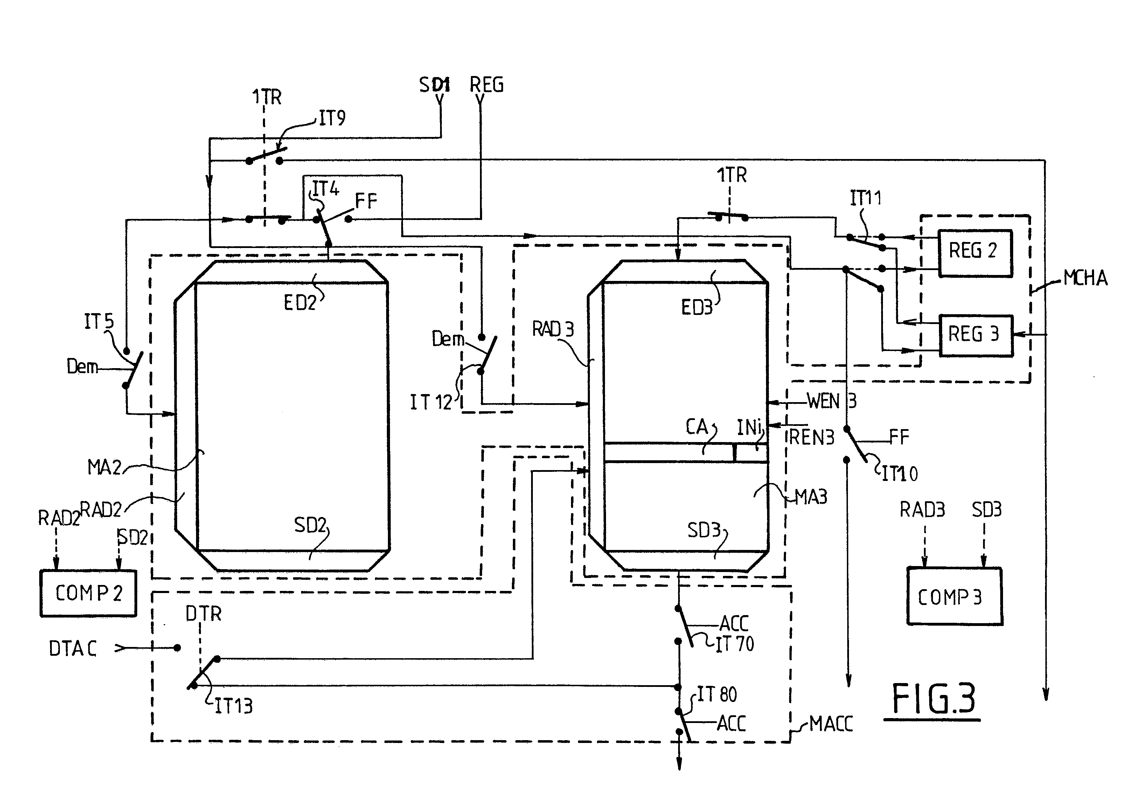

La figure 3 illustre de façon schématique un synoptique montrant les moyens de chaînage et d'accès utilisés dans une autre variante du dispositif selon l'invention destinés à un ensemble de fragments du type DEPS. Les moyens de chaînage MCHA comprennent en outre une troisième mémoire auxiliaire MA3 comportant une entrée de données ED3 et une sortie de données SD3 et associés à un troisième registre d'index RAD3. Cette mémoire auxiliaire MA3 comporte également au moins N cases CA respectivement associées à un index INi qui détermine sa position dans la mémoire MA3. Le troisième registre d'index RAD3 est propre donc à désigner respectivement chacune des cases CA par leur index ou identification. Ces moyens de chaînage MCHA comportent également un deuxième registre de contrôle REG2 et un troisième registre de contrôle REG3.

Les moyens d'attribution MATT comportent en outre un double inverseur IT11 reliant alternativement ainsi que cela sera expliqué ci-après l'entrée des deuxième et troisième registres de contrôle à la sortie de données SD1 de la première mémoire auxiliaire et reliant alternativement la sortie des deuxième et troisième registres de contrôle à l'entrée de données ED3 de la troisième mémoire auxiliaire MA3. Ainsi, pour cet interrupteur IT11, la notation adoptée sur la figure 3 signifie l'alternance de positions de cet interrupteur. Les moyens d'attribution comportent également un interrupteur IT10 commandé par le signal de frontière de liste FF permettant la liaison de la sortie de données SD1 de la première mémoire auxiliaire vers l'extérieur lors du dernier fragment du premier ensemble attribué. Bien entendu, les autres constituants des moyens d'attribution représentés sur la figure 1A, bien qu'ils ne soient pas tous représentés sur la figure 3, subsistent dans cette variante.

Les moyens de commande MC, délivrent en outre, dans cette variante, des signaux WEN3 et REN3 analogues à WEN1 et REN1. Une requête d'accès dans une telle variante peut comporter, soit l'identification du premier tampon auquel on désire accéder et qui correspond à une requête d'accès en écriture dans l'ensemble de fragments attribués, ou peut comporter également l'identification du dernier fragment utilisé en écriture sur l'ensemble attribué, ce qui correspond à une requête d'accès en lecture dans l'ensemble de fragments attribués. Aussi les moyens de commande délivrent-t-ils l'identification DTAC du dernier fragment utilisé. Ils délivrent également un signal logique de contrôle DTR associé à ce dernier fragment.

Les moyens d'accès MACC, comportent, outre les constituants représentés sur la figure 1A et non représentés sur cette figure 3, un interrupteur IT13 commandé par le signal logique DTR et permettant de délivrer l'identification du dernier tampon utilisé auquel on désire accéder, DTAC, au troisième registre d'index RAD3. Les moyens d'accès comportent également un interrupteur IT70 et un interrupteur IT80 analogues aux interrupteurs IT7 et IT8, commandés par le signal de logique ACC et reliant la sortie de données SD3 à la sortie du dispositif. La combinaison des interrupteurs IT70 et IT13 permet de relier également cette sortie de données SD3 au troisième registre d'index RAD3.

D'une façon analogue au comparateur COMP2, un autre comparateur COMP3 est associé à la troisième mémoire auxiliaire et est propre à comparer le contenu du troisième registre d'index RAD3 avec la sortie de données SD3 de cette troisième mémoire auxiliaire.

En ce qui concerne les moyens de libération et d'initialisation, la variante de ce mode de réalisation utilise les constituants de la figure 1A.

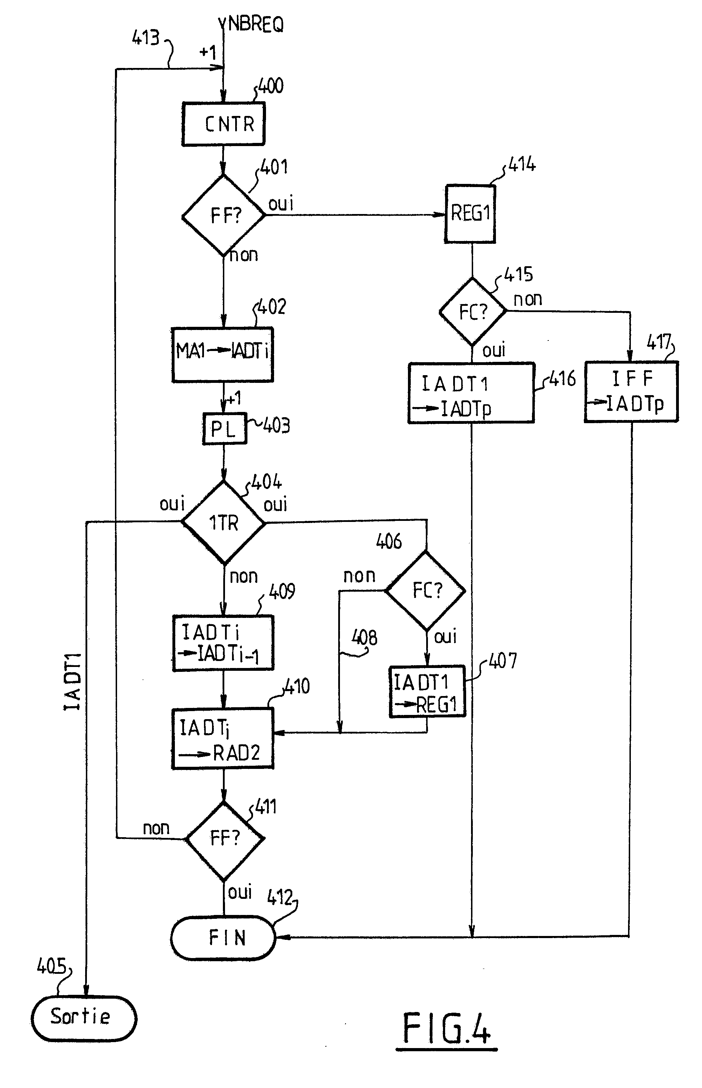

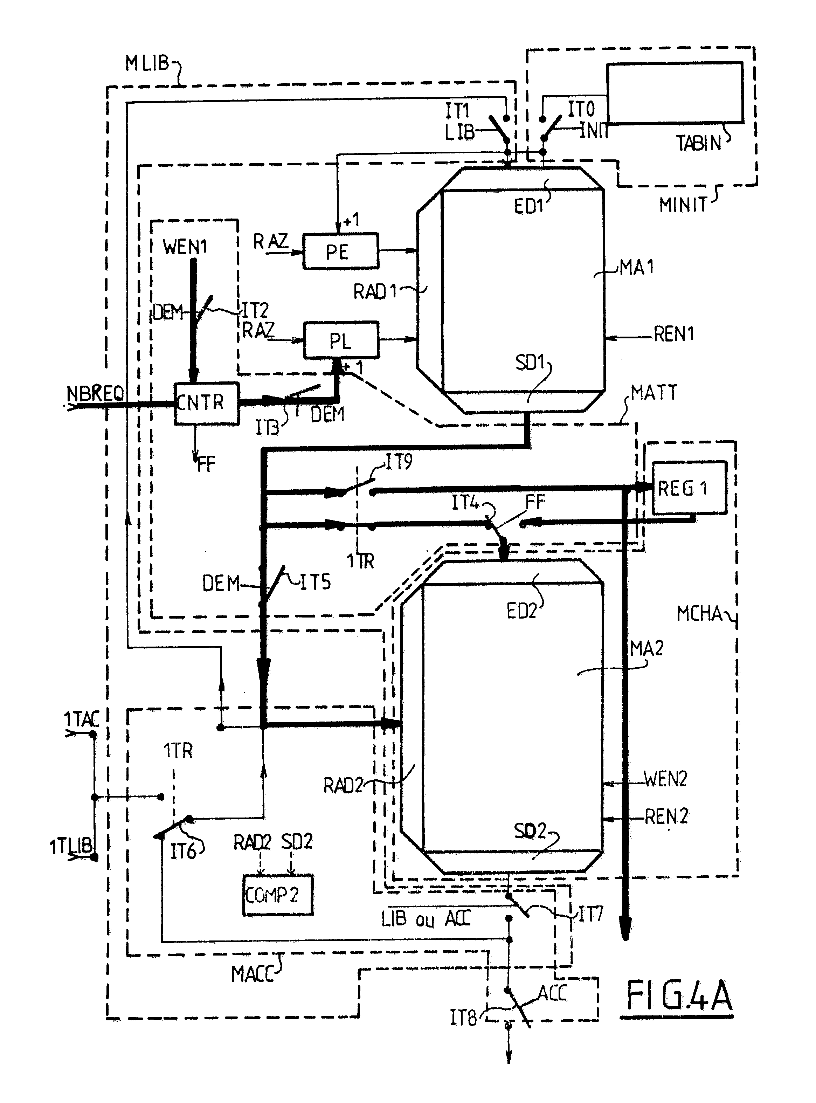

Il est maintenant fait référence aux figures 4 et 4A pour illustrer un premier mode de fonctionnement du dispositif selon l'invention. Ce premier mode de fonctionnement consiste en une requête d'attribution d'un premier ensemble de p fragments, ce premier ensemble pouvant être soit du type liste circulaire, soit du type PEPS. La figure 4 illustre les étapes de l'algorithme de fonctionnement, tandis que la figure 4A, qui est la réplique de la figure 1A, illustre de façon graphique, par des traits gras les liaisons entre les différents éléments constitutifs du dispositif lors de ce fonctionnement.

Avant d'expliquer en détail ce premier mode de fonctionnement, il convient de noter ici que le mode d'initialisation a été au préalable effectué, ce mode consistant à transférer le contenu de la table d'initialisation TABIN dans la première mémoire auxiliaire MA1. Ainsi, chaque cellule de cette première mémoire auxiliaire MA1 contient une identification IADTi d'un fragment de la mémoire de travail. Les pointeurs d'entrée et de sortie PE et PL ont été ensuite prépositionnés tous les deux sur un même index désignant une seule cellule par exemple la cellule de rang 1 contenant l'identification IADT1.

En réponse à la requête d'attribution RDEM, l'organe de comptage CNTR reçoit dans l'étape 400 le nombre NBREQ et commence son cycle de comptage. Au début de ce cycle, dans l'étape 401, le signal de frontière de liste FF n'étant pas présent, on accède directement à l'étape 402 dans laquelle la première mémoire auxiliaire MA1 délivre l'identification IADT1 du premier fragment puis incrémente dans l'étape 403 le pointeur de sortie PL. Dans l'étape 404 est effectué le test logique du signal de contrôle du premier fragment 1TR. Ce signal de contrôle 1TR étant "vrai", on teste, dans l'étape 406 la nature du premier ensemble de p fragments à l'aide de la variable logique NATFI. On regarde en particulier s'il s'agit d'une liste circulaire FC. Si tel est le cas, l'identification IADT1 du fragment de rang 1 est stockée, dans l'étape 407, dans le premier registre de contrôle REG1 puis stockée dans le deuxième registre d'index RAD2 dans l'étape 410. S'il s'agit au contraire d'un premier ensemble de type PEPS, l'étape 407 n'est plus nécessaire (étape 408), et l'identification IADT1 est stockée dans le deuxième registre d'adresse dans l'étape 410.

Comme le signal de frontière de liste FF n'est pas disponible (étape 411), on revient à l'étape 400, le compteur s'incrémentant d'un pas. Un cycle générique i de cet algorithme consiste donc, dans l'étape 402 à la délivrance par la première matrice auxiliaire MA1 de l'identification IADTi du fragment de rang i suivi de l'incrémentation d'un pas du pointeur de sortie PL. Cette identification IADTi est ensuite présentée à l'entrée de données ED2 de la deuxième matrice auxiliaire et stockée dans un emplacement de celle-ci désigné par l'index disponible en sortie du deuxième registre d'index et qui correspond à l'identification IADTi-1 du fragment de rang i-1. Une fois ce stockage effectué, l'identification IADTi du fragment de rang i, est stockée dans le deuxième registre d'index RAD2 pour préparer le rangement ultérieur dans un emplacement de cette deuxième mémoire auxiliaire de l'identification IADTi+1 du fragment de rang i+1.

Lorsque le signal de frontière de liste est présent, le premier registre de contrôle REG1 est activé (étape 414). S'il s'agit d'une liste circulaire (étape 415), l'identification IADT1 du fragment de rang 1 du premier ensemble est stockée dans l'emplacement de la deuxième mémoire auxiliaire MA2 identifié par l'index IADTp disponible en sortie du deuxième registre d'index RAD2 et correspondant au fragment de rang p c'est-à-dire le dernier. S'il s'agit au contraire d'un premier ensemble du type PEPS, une information de frontière de liste appropriée, qui peut être par exemple l'identification IADTp du dernier fragment, est stockée dans l'emplacement correspondant au fragment de rang p (étape 417). Selon cet exemple, les moyens d'accès peuvent détecter l'identité entre le contenu d'un emplacement de la deuxième mémoire auxiliaire MA2, IADTp, et l'identification qui permet d'identifier cet emplacement. Ils utilisent pour cela le comparateur COMP2. L'étape de fin 412 est ensuite activée.

Il est à noter, qu'au début du cycle de comptage, lors du premier fragment attribué, l'identification de celui-ci IADT1 est délivrée en sortie du dispositif dans l'étape 405 ce qui permet à un utilisateur d'identifier ce premier ensemble de p fragments par l'identification du premier fragment.

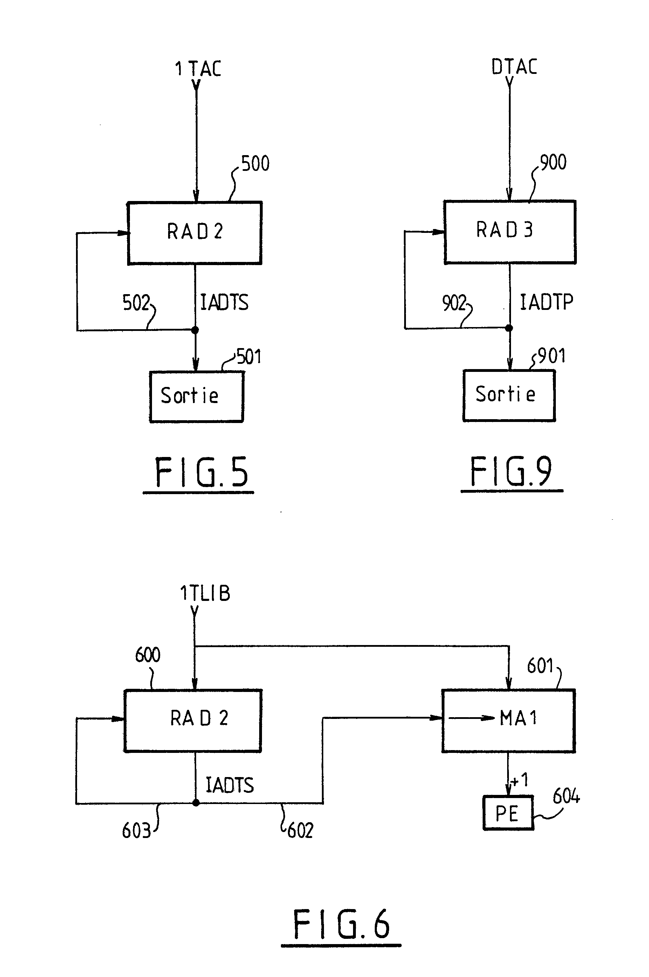

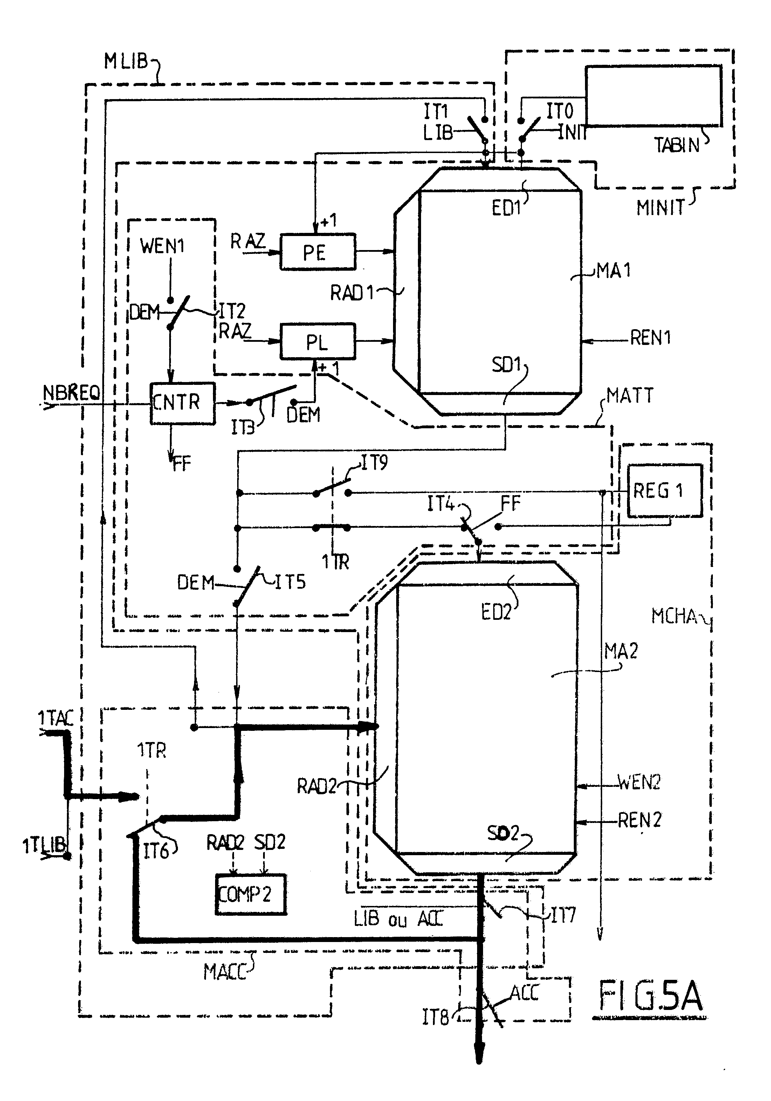

Il est maintenant fait référence aux figures 5 et 5A pour illustrer un accès à un deuxième ensemble de r fragments chaînés. D'une façon analogue à la figure 4A, la figure 5A illustre de façon graphique l'algorithme représenté sur la figure 5. En réponse à une requête d'accès à un deuxième ensemble de r fragments (requête comportant l'identification 1TAC du premier fragment, auquel on désire accéder, de ce deuxième ensemble) cette identification 1TAC est envoyée dans le deuxième registre d'index RAD2 qui désigne alors l'emplacement de la deuxième mémoire auxiliaire correspondant à cette identification et dans laquelle se trouve l'identification du fragment suivant IADTS (étape 500). Cette identification du fragment suivant IADTS est ensuite d'une part délivrée en sortie du dispositif (étape 501) et d'autre part réinjectée dans le deuxième registre d'index RAD2 pour désigner l'identification du fragment suivant (étape 502). Il est à noter que cet algorithme est valable que le deuxième ensemble soit du type liste circulaire ou du type PEPS. Dans le cas où ce deuxième ensemble est du type PEPS, lorsque la première information de frontière de liste IFF sera désignée, l'algorithme prendra fin. Dans le cas d'une liste circulaire, il y aura rebouclage à partir du dernier fragment accédé vers le premier. Il faut encore noter que cette requête d'accès est valable aussi bien en écriture qu'en lecture dans le cas d'un deuxième ensemble de type liste circulaire ou PEPS.

Il convient enfin de remarquer que, lors de cette requête d'accès, la fin de l'algorithme est obtenue par la désignation de la première information de frontière de liste, ce qui suppose donc que l'on soit parvenu jusqu'au dernier fragment attribué. On peut cependant concevoir d'obtenir la fin de l'algorithme d'accès avant la désignation de cette première information de frontière de liste si l'utilisateur en décide ainsi.

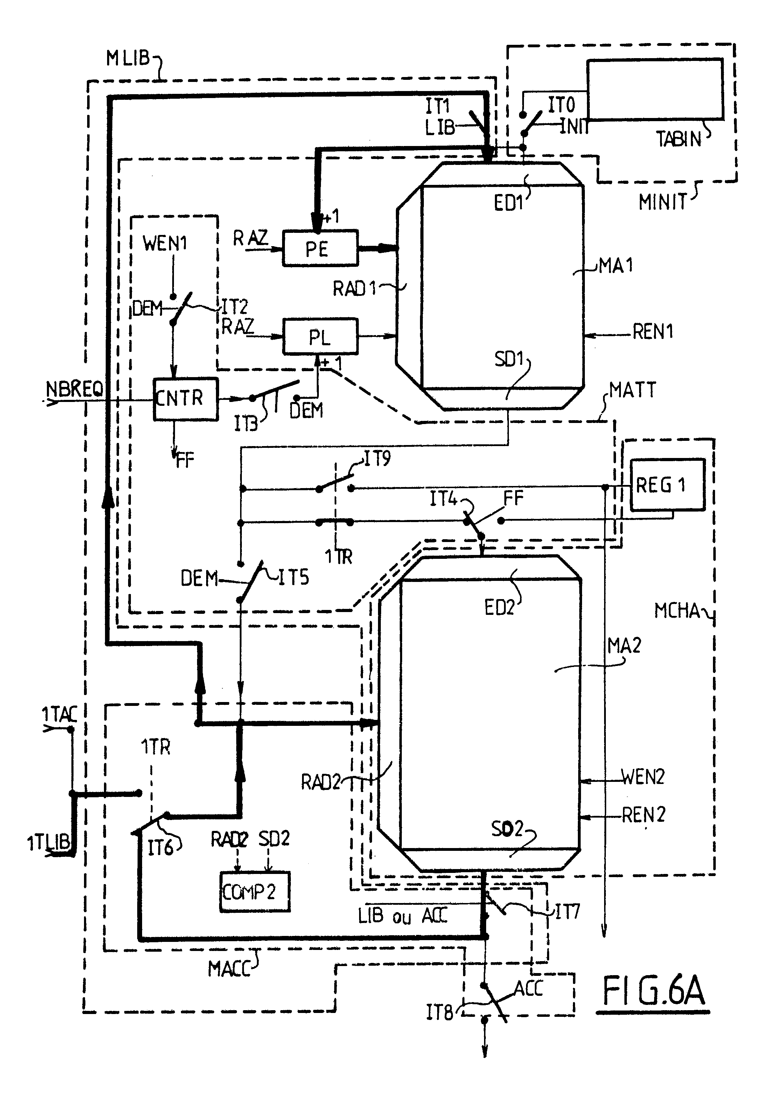

Il est maintenant fait référence aux figures 6 et 6A pour illustrer une libération d'un troisième ensemble de q fragments chaînés identifié par l'identification 1TLIB du premier fragment à libérer. D'une façon analogue aux figures 4A et 5A, la figure 6A illustre graphiquement l'algorithme représenté sur la figure 6. L'identification du premier fragment à libérer 1TLIB est présentée simultanément dans le premier registre d'index RAD1 de la première mémoire auxiliaire (étape 601) pour être stockée dans la cellule de cette mémoire MA1 dont l'index est désigné par le pointeur d'entrée PE, et dans le deuxième registre d'index RAD2 (étape 600). Lorsque le stockage de l'identification 1TLIB est effectué dans la mémoire MA1, le pointeur d'entrée est incrémenté d'un pas (étape 604) pour désigner la prochaine cellule disponible. Dans l'étape 600, l'identification du premier fragment ayant été stockée dans le registre d'index, le contenu de la cellule dont l'index correspond à cette identification va délivrer en sortie l'identification du prochain fragment à libérer IADTS. Cette identification IADTS est envoyée simultanément dans la première mémoire auxiliaire (étape 602) et dans le deuxième registre d'index (étape 603). Cette identification IADTS sera stockée dans l'étape 601 d'une façon analogue à celle définie pour le premier fragment et le registre d'index RAD2 désignera alors l'emplacement de la deuxième mémoire auxiliaire contenant l'identification du fragment suivant à libérer. Il est à noter, que cet algorithme de libération est valable aussi bien pour un troisième ensemble du type liste circulaire ou du type PEPS ou du type DEPS.

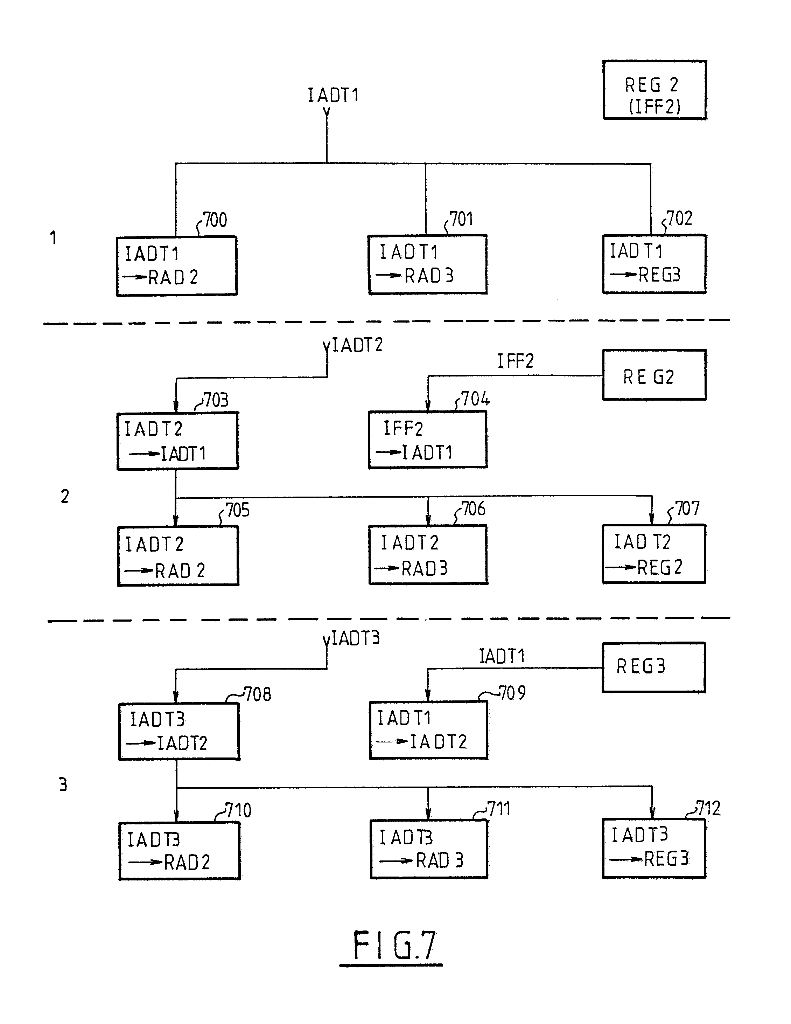

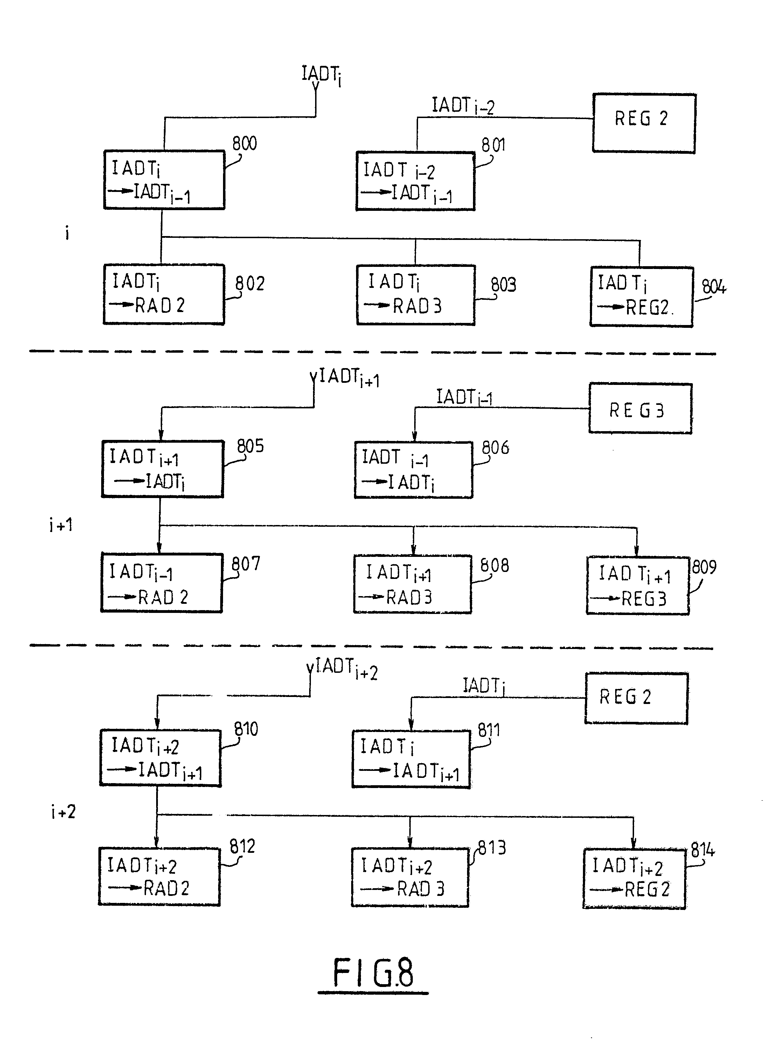

Il est maintenant fait référence aux figures 7 et 8 pour illustrer un algorithme d'attribution d'un premier ensemble de p fragments dans le cas où ce premier ensemble est du type DEPS. La figure 7 illustre plus précisément les trois premières étapes de cet algorithme tandis que la figure 8 illustre plus particulièrement trois étapes génériques successives de cet algorithme.

Pour la première étape de cet algorithme correspondant à la délivrance par la première mémoire auxiliaire de l'identification IADT1 du premier frag-

ment à attribuer, le deuxième registre de contrôle REG2 contient une deuxième information de fin de liste IFF2. L'identification IADT1 est simultanément stockée dans le deuxième registre d'index RAD2 (étape 700) dans le troisième registre d'index RAD3 (étape 701), et dans le troisième registre de contrôle REG3 (étape 702).

Lors de la délivrance de l'identification IADT2 du deuxième fragment par la première mémoire auxiliaire MA1 celle-ci est stockée (étape 703) dans l'emplacement de la deuxième mémoire auxiliaire MA2 identifié par l'index IADT1 puis est présentée dans le deuxième registre d'index RAD2 (étape 705). Ces deux étapes sont bien entendu identiques à celles que l'on observe dans l'algorithme d'attribution de la figure 4. Le deuxième registre de contrôle REG2 délivre l'information de frontière de liste IFF2 à l'entrée de données de la troisième mémoire auxiliaire et il y a stockage (étape 704) de cette information de frontière de liste IFF2 dans la case de cette troisième mémoire auxiliaire identifiée par l'index IADT1. L'identification IADT2 a également été stockée en parallèle du stockage dans le deuxième registre d'index, dans le troisième registre d'index de la troisième mémoire auxiliaire (étape 706) ainsi que dans le deuxième registre de contrôle REG2 (étape 707).

Lors de la troisième étape de cet algorithme c'est-à-dire l'étape concernant le fragment de rang 3, l'identification IADT3 est stockée dans la première mémoire auxiliaire selon les étapes 708 et 710 déjà implicitement décrites dans l'algorithme de la figure 4. Le troisième registre de contrôle REG3 qui avait en mémoire l'identification du premier fragment IADT1 délivre cette identification à l'entrée de données de la troisième mémoire auxiliaire MA3 et celle-ci est stockée dans la case identifiée par l'index disponible en sortie du troisième registre d'index RAD3 c'est-à-dire l'index IADT2 (étape 709). Parallèlement à l'étape de stockage 710, l'identification IADT3 est stockée dans le registre d'index RAD3 pour préparer le prochain rangement (étape 711) et également dans le troisième registre de contrôle REG3 (étape 712).

D'une façon générale, le chaînage des fragments dans la deuxième mémoire auxiliaire (étapes 800, 802, 805, 807, 810, 812), est analogue au chaînage effectué dans le cas d'un premier ensemble de type PEPS ou liste circulaire. Par contre le chaînage dans la troisième mémoire auxiliaire MA3 s'effectue de la façon suivante :
- lors de la délivrance par la première mémoire auxiliaire MA1 de l'identification IADTi du fragment de rang i, le deuxième registre de contrôle, contenant l'identification IADTi-2 du fragment de rang i-2, délivre cette identification pour qu'elle soit stockée dans la case de la troisième mémoire auxiliaire désignée par l'index IADTi-1 disponible en sortie du troisième registre d'index et correspondant à l'identification du fragment de rang i-1 (étape 801). L'identification IADTi du fragment de rang i est présentée dans le troisième registre d'index RAD3 (étape 803) et stockée également dans le deuxième registre de contrôle REG2 ( étape 804). A l'étape suivante, de rang i+1, l'identification IADTi-1 du fragment de rang i-1 est stockée dans la troisième mémoire auxiliaire (étape 806), dans la case identifiée par l'index IADTi. Cette identification IADTi-1 était stockée dans le troisième registre de contrôle REG3. De même, l'identification IADTi+1 est présentée dans le troisième registre d'index RAD3 (étape 808) ainsi que dans le troisième registre de contrôle REG3 (étape 809).

L'étape suivante i+2 comporte les mêmes opérations. L'identification IADTi, contenue préalablement dans le deuxième registre de contrôle REG2 est stockée (étape 811) dans la case de la troisième mémoire auxiliaire identifiée par l'index IADTi+1, tandis que l'identification IADTi+2 est présentée dans le registre d'index RAD3 (étape 813) et dans le deuxième registre de contrôle REG2 (étape 814).

L'homme de l'art remarquera donc que lorsque le premier ensemble de p fragments est du type DEPS, les moyens de chaînage sont propres à effectuer, par l'intermédiaire de la deuxième mémoire auxiliaire, un premier chaînage des p fragments destiné à être utilisé pour un travail d'écriture dans le premier ensemble, et par l'intermédiaire de la troisième mémoire auxiliaire et des deuxième et troisième registres de contrôle, un deuxième chaînage des p fragments, destiné à être utilisé pour un travail de lecture dans le premier ensemble, ce deuxième chaînage étant inverse du premier chaînage.

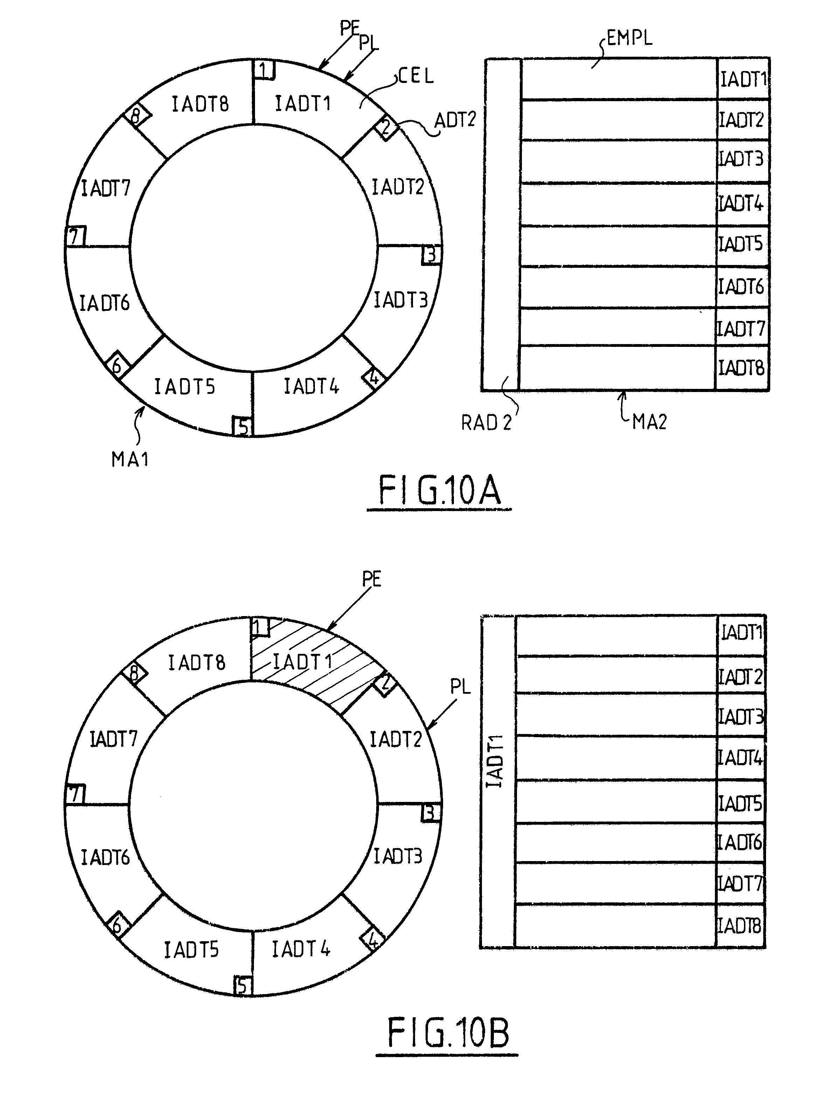

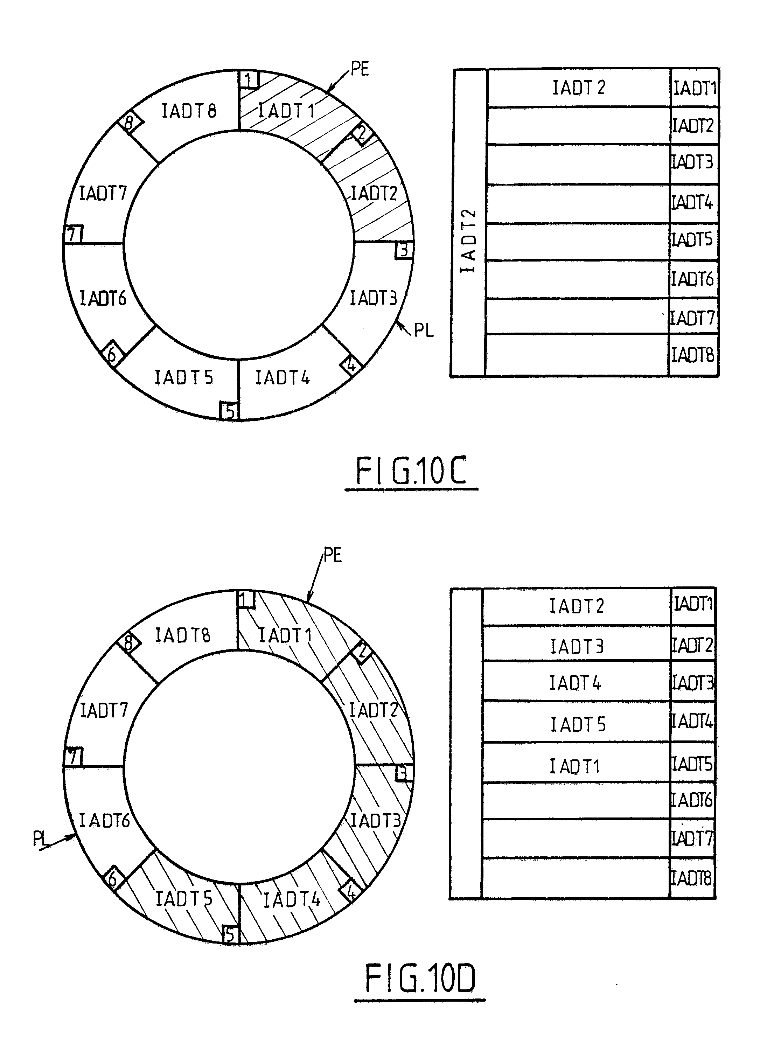

Il est maintenant fait référence à la figure 9 pour illustrer schématiquement un algorithme permettant l'accès en lecture à un ensemble de r fragments chaînés dans le cas où cet ensemble de r fragments est du type DEPS. Cet algorithme est analogue à l'algorithme de la figure 5 représentatif d'un accès en écriture ou en lecture dans le cas d'un ensemble du type PEPS. La seule différence réside dans le fait que cette fois-ci la requête d'accès en lecture dans le cas DEPS, contient l'identification DTAC du dernier fragment utilisé en écriture sur l'ensemble auquel on souhaite accéder, et après présentation d'une identification dans le troisième registre d'index RAD3 (étape 900) la troisième mémoire auxiliaire délivre aussi bien en sortie (étape 901) qu'à nouveau dans le troisième registre d'index (étape 902) l'identification du fragment précédent IADTP.

D'une façon analogue à la deuxième mémoire auxiliaire, les moyens d'accès peuvent utiliser le comparateur COMP3 pour mettre en évidence la deuxième information de frontière de liste IFF2 en détectant l'identité entre le contenu d'une case de la troisième mémoire auxiliaire et l'identification qui permet d'identifier cette case.

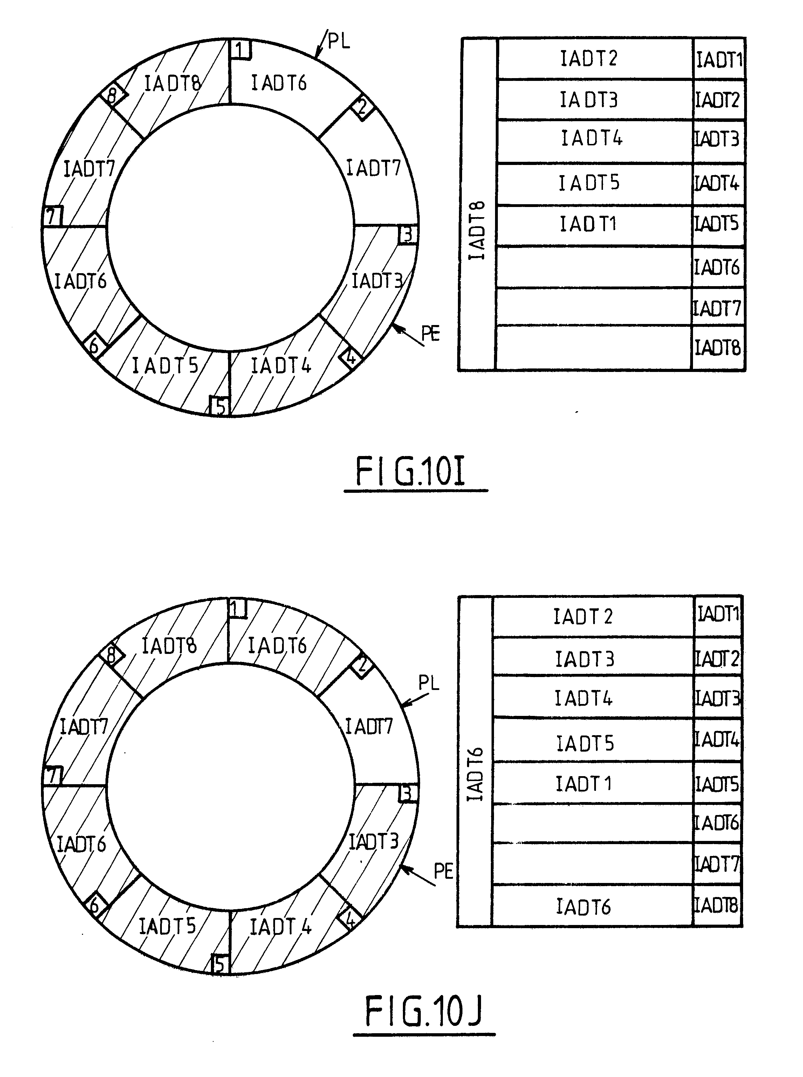

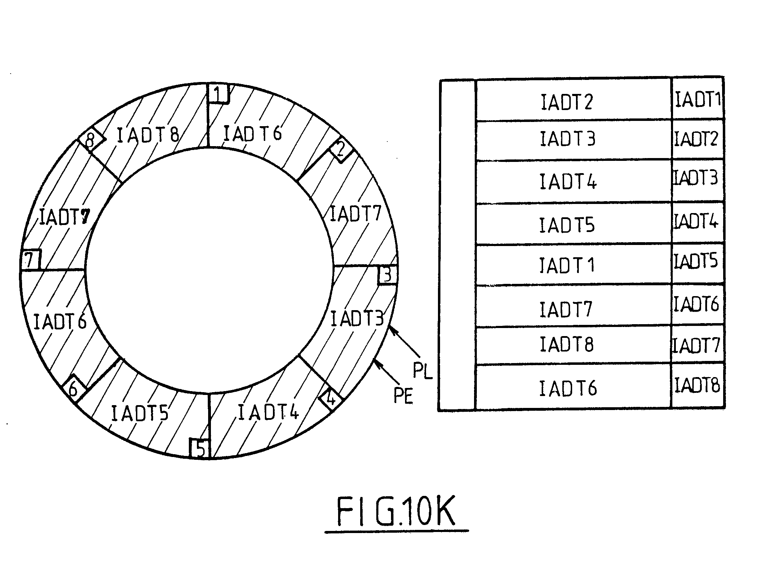

Il est maintenant fait référence aux figures 10A à 10K pour illustrer un exemple particulier de fonctionnement du dispositif selon l'invention. Dans cet exemple, il est supposé qu'un premier utilisateur délivre une requête d'attribution d'un premier ensemble de cinq fragments organisé en liste circulaire puis qu'un deuxième utilisateur délivre une requête d'attribution d'un autre premier ensemble de deux fragments organisé en liste PEPS. Il est ensuite supposé que le dispositif reçoive une requête de libération concernant cet autre premier ensemble de deux fragments puis à nouveau par un troisième utilisateur une requête d'attribution d'un premier ensemble supplémentaire de trois fragments organisé en liste circulaire.

Sur ces figures, la première mémoire auxiliaire MA1 a été représentée sous forme circulaire pour bien illustrer la notion de boucle décrite par les pointeurs d'entrée et de sortie. Il a été supposé que la mémoire de travail contenait huit zones identifiées par les identifications IADT1 à IADT8. La première mémoire auxiliaire MA1 contient donc huit cellules numérotées de 1 à 8, ces numéros désignant pour des raisons de simplicité les index respectifs IADT1 à IADT8 de ces cellules. La deuxième mémoire auxiliaire MA2 comprend également huit emplacements numérotés de 1 à 8 et identifiés par leurs index respectifs IADT1 à IADT8. (Il est en effet rappelé que pour des raisons de simplicité les index INi sont semblables aux identifications IADTi).

A l'initialisation (figure 10A) les moyens d'initialisation ont chargé dans la première mémoire auxiliaire MA1 les identifications respectives IADT1 à IADT8 des huit fragments de la mémoire de travail. La deuxième mémoire auxiliaire MA2 est vide.

Les figures 10B à 10D illustrent les configurations respectives des première et deuxième mémoires auxiliaires ainsi que des pointeurs d'entrée et de sortie PE et PL dans le cas du premier ensemble de cinq fragments.

Sur la mémoire auxiliaire MA1, les cellules grisées représentent des fragments de la mémoire de travail effectivement attribués. Ainsi, lors de la première étape, l'identification IADT1 est stockée dans le registre d'index RAD2 et le pointeur de sortie est pointé sur la cellule 2 (figure 10B).

La figure 10C illustre le pas suivant avec l'identification IADT2 présente dans l'emplacement de la deuxième mémoire auxiliaire identifié par l'index IADT1 (car l'index IADT1 était présent depuis le pas précédent dans le registre d'index RAD2) et présente également dans le registre d'index RAD2 pour préparer le rangement suivant.

La figure 10D illustre enfin la configuration finale de ces éléments après attribution des cinq fragments en liste circulaire. On notera donc que le pointeur de sortie PL pointe sur la cellule n°6, le pointeur d'entrée pointant toujours sur la cellule 1. L'identification IADT1 est présente dans l'emplacement identifié par l'index IADT5 de la deuxième mémoire auxiliaire puisqu'il s'agit d'une liste circulaire.

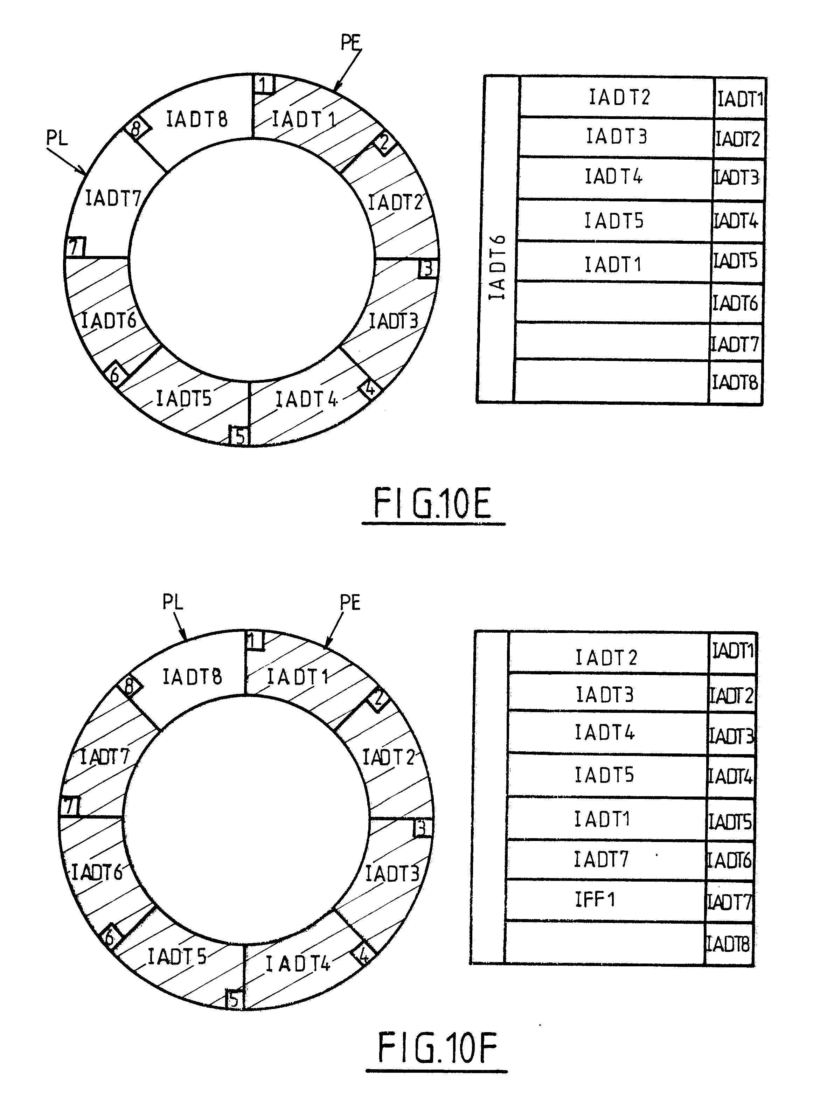

Les figures 10E et 10F illustrent les configurations de ces différents constituants dans le cas de la deuxième attribution d'un premier ensemble de deux fragments organisés en liste PEPS. On remarque alors, sur la figure 10F, en fin d'attribution, que la première information de frontière de liste IFF1 est stockée dans l'emplacement de la deuxième mémoire auxiliaire désignée par l'identification du deuxième et dernier fragment de cet autre premier ensemble c'est-à-dire l'identification IADT7. On remarque également que le pointeur d'entrée PE est toujours pointé sur la cellule 1 tandis que le pointeur de sortie PL pointe sur la dernière cellule disponible dans la première mémoire auxiliaire c'est-à-dire la cellule n°8. Les moyens de commande détectent effectivement qu'il ne reste plus qu'une seule cellule de disponible car si l'on incrémente encore d'un pas le pointeur de sortie PL celui-ci sera sur la même cellule que le pointeur d'entrée PE.

A ce stade de l'explication, il convient de remarquer que les contenus des cellules de la première mémoire auxiliaire comprises, suivant ladite boucle, entre le pointeur de sortie PL inclus et le pointeur d'entrée PE exclu désignent par leur identification l'ensemble des fragments libres de ladite mémoire de travail. Dans le cas du premier ensemble de cinq fragments organisés en liste circulaire, il restait donc trois fragments libres respectivement identifiés IADT6, IADT7 et IADT8 tandis qu'après la deuxième allocation de deux fragments il ne restait plus qu'un seul fragment de disponible identifié IADT8. La première mémoire auxiliaire apparaît donc bien comme étant une table de vacance.

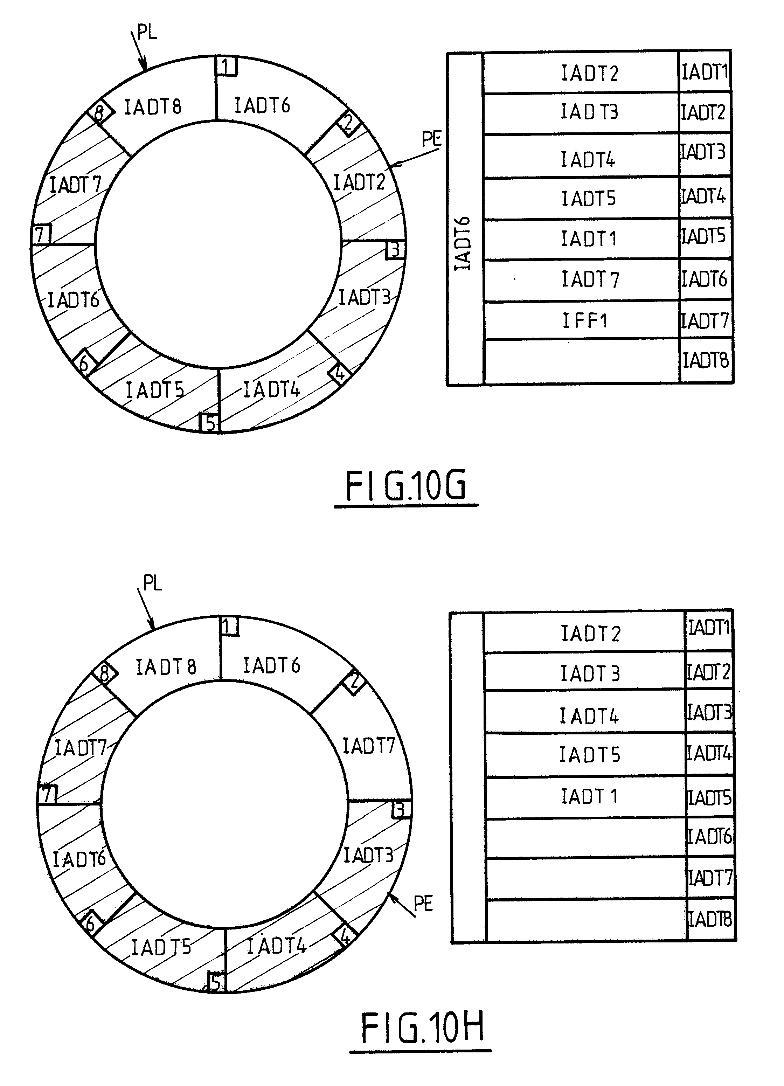

Les figures 10G et 10H illustrent la libération de cet autre premier ensemble de deux fragments du type PEPS et identifié par l'identification du premier fragment de cet ensemble c'est-à-dire l'identification IADT6. Sur présentation de cette identification IADT6 qui est donc égale ici à 1TLIB, les moyens de libération la stocke dans la cellule 1 de la première mémoire auxiliaire c'est-à-dire celle qui était désignée par le pointeur d'entrée PE puis incrémente ce pointeur d'un pas pour le pointer sur la cellule 2. L'identification IADT6 est également présentée dans le registre d'index RAD2 pour désigner la cellule n°6 qui contient l'identification IADT7 c'est-à-dire l'identification du fragment suivant de ce premier ensemble. La figure 10H illustre la configuration finale des différents constituants après libération de cet ensemble de deux fragments. Les identifications IADT6 et IADT7 ayant été rangées dans la première mémoire auxiliaire dans les cellules 1 et 2, le pointeur d'entrée désignent maintenant la cellule n°3 qui sera la prochaine cellule propre à recevoir un éventuel nouveau fragment libéré.

Comme il reste à la suite de cette libération trois fragments disponibles, identifiés par les identifications IADT8, IADT6 et IADT7, on peut envisager l'attribution à un troisième utilisateur de trois fragments notamment organisés en liste circulaire. Ceci est illustré sur les figures 10I à 10K le principe étant le même que pour l'attribution du premier ensemble de cinq fragments.

Sur la figure 10K on voit la configuration finale des différents constituants du dispositif. On remarque notamment que les pointeurs d'entrée et de sortie sont situés sur la même cellule ce qui signifie que la première mémoire auxiliaire est vide remarque étant faite que cette position identique des pointeurs d'écriture d'entrée et de sortie sur la même cellule peut signifier que la mémoire auxiliaire MA1 est pleine. On distingue les deux configurations par la détection lors du pas précédent de la position du pointeur de sortie par rapport au pointeur d'entrée. Si, en incrémentant d'un pas le pointeur de sortie on obtient le pointeur d'entrée la première mémoire auxiliaire est vide, c'est-à-dire que tous les fragments de la mémoire de travail ont été attribués. Si au contraire en incrémentant d'un pas le pointeur d'entrée, on obtient le pointeur de sortie, alors la première mémoire auxiliaire est pleine ce qui signifie que tous les fragments de la mémoire de travail sont disponibles.

Ainsi l'homme de l'art comprendra que les différents utilisateurs ont pu se voir allouer des zones de la mémoire de travail organisées en liste. Cette opération a été effectuée indépendamment de l'unité de calcul qui peut être par exemple un microprocesseur embarqué, ce qui est un gain de temps considérable dans les cycles temps réel. D'autre part, ainsi qu'il apparaît sur la figure 10K, notamment pour le dernier ensemble de trois fragments attribués, l'ordre des identifications de ces fragments dans la deuxième mémoire auxiliaire semble quelconque bien que ceux-ci soient en fait physiquement chaînés les uns aux autres. Cette deuxième mémoire auxiliaire apparaît donc bien comme étant une table des liens. Enfin la libération des fragments d'un ensemble permet d'optimiser l'espace mémoire de la mémoire de travail sans perte de place inutile.

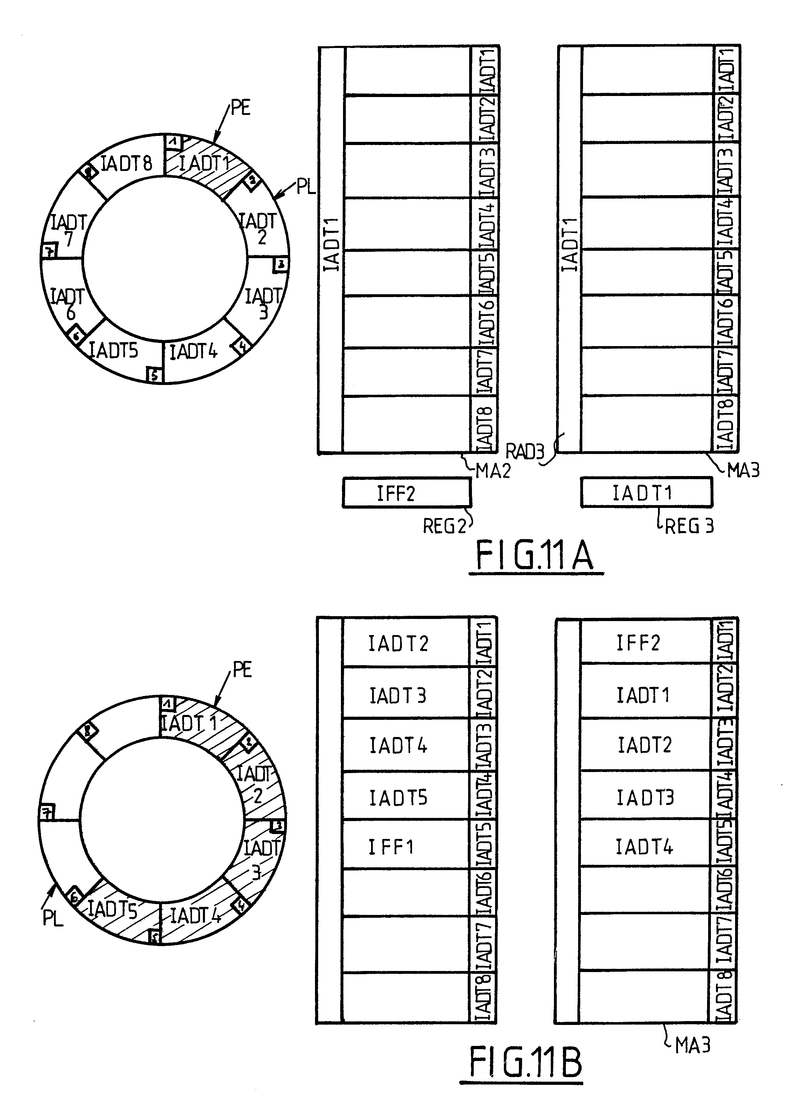

Les figures 11A et 11B illustrent un deuxième exemple particulier du fonctionnement du dispositif dans le cas d'une attribution d'un premier ensemble de cinq fragments du type DEPS.

La figure 11A illustre la première étape de cette attribution et la figure 11B la configuration finale de l'attribution. Les étapes ont été notamment décrites pour les trois premières sur la figure 7. Si par exemple on souhaite accéder en lecture à cet ensemble attribué, sur présentation de l'identification IADT5 du dernier fragment attribué, la troisième mémoire auxiliaire MA3 pourra délivrer successivement l'identification IADT4 puis IADT3 puis IADT2 puis IADT1 puis stopper cet accès sur présence de l'information de frontière de liste IFF2. Cette troisième mémoire auxiliaire joue donc également un rôle de table des liens en effectuant un chaînage inverse. Par contre, lors d'une requête d'accès en écriture, sur présentation de l'identification du premier fragment IADT1, la deuxième mémoire auxiliaire MA2 pourra délivrer successivement les identifications IADT2 à IADT5 puis stopper cette délivrance en réponse à l'information de frontière de liste IFF1.

On remarquera qu'il est tout à fait possible d'accéder en lecture comme en écriture sur présentation de l'identification de l'un quelconque des fragments de l'ensemble attribué. Le dernier fragment utilisé par le travail d'écriture pouvant être différent du dernier fragment de l'ensemble attribué.

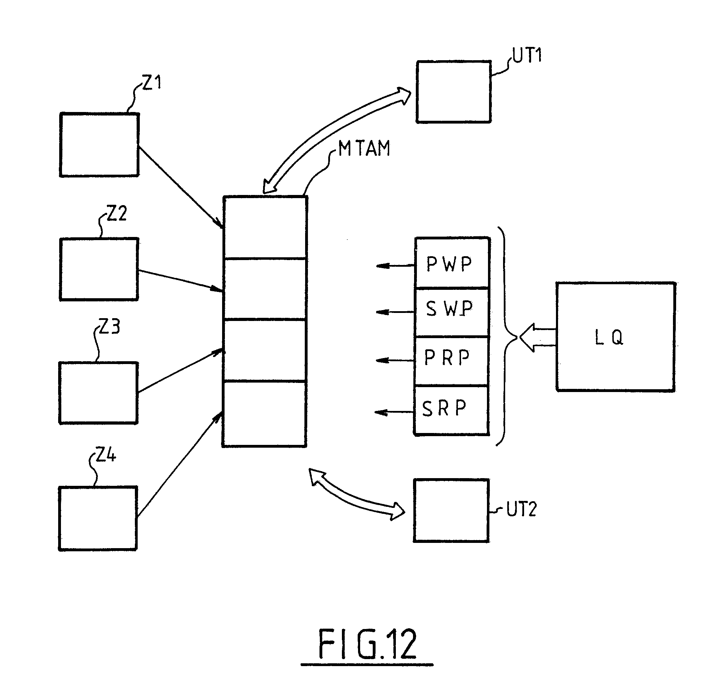

Il est maintenant fait référence à la figure 12 pour illustrer une application particulièrement avantageuse du dispositif selon l'invention dans laquelle la mémoire vive de travail MT est utilisée comme mémoire-tampon entre deux utilisateurs UT1 et UT2. On suppose donc que le dispositif a attribué à deux utilisateurs UT1 et UT2 une allocation de mémoire choisie comportant par exemple quatre fragments Z1, Z2, Z3, Z4 de la mémoire de travail MT, ces quatre fragments définissant une mémoire-tampon MTAM entre ces deux utilisateurs. Dans le cas où il n'est effectué qu'une seule allocation de mémoire choisie, un utilisateur UT1 travaillera en écriture dans la mémoire-tampon MTAM et l'utilisateur UT2 travaillera en lecture dans la mémoire-tampon MTAM. Il peut cependant être effectué une deuxième allocation de mémoire choisie pour permettre un travail en lecture et un travail en écriture simultanés par les deux utilisateurs.

On suppose que les allocations de mémoire choisies sont gérées par grains contenant chacun un nombre prédéterminé de mots et faisant l'objet chacun d'un contrôle de validité par exemple effectué en fin de grain et consistant à tester la somme de tous les bits de tous les mots du grain. Le dispositif comprend alors en outre un pointeur de grain courant en écriture PWP, un pointeur de grain sauvegardé en écriture SWP, un pointeur de grain courant en lecture PRP, et un pointeur de grain sauvegardé en lecture SRP ainsi que des moyens, tels qu'une logique de commande pour faire progresser ces pointeurs en fonction du contrôle de validité du grain en cours.

Le principe général de progression de ces pointeurs est le suivant :
- dans le cas de l'écriture d'un grain dans la mémoire-tampon, le pointeur de grain courant en écriture PWP est incrémenté d'un pas après chaque écriture d'un mot du grain dans la mémoire-tampon à l'adresse désignée par ce pointeur courant en écriture. Ainsi tous les mots du grain peuvent être stockés à des endroits contigus de la mémoire-tampon. Parallèlement, le pointeur de grain sauvegardé en écriture SWP conserve l'adresse de l'endroit où est stocké le premier mot du grain. Dans le cas où le contrôle de validité s'avère négatif c'est-à-dire dans le cas où il y a eu une erreur de transmission, le pointeur de grain courant en écriture PWP se repositionne sur l'adresse du premier mot du grain à l'aide de l'information que lui fournit le pointeur de grain sauvegardé en écriture SWP ce qui permet d'écrire le grain suivant aux endroits où avait été écrit le grain précédent. Ceci bien sûr se fait indépendamment du microprocesseur ce qui est encore un gain de temps appréciable dans les cycle temps réel et évite la perte de place dans la mémoire-tampon.

Dans le cas où la mémoire-tampon est du type PEPS, lors de la lecture d'un grain, le pointeur de grain courant en lecture PRP est incrémenté d'un pas après chaque lecture d'un mot dans la mémoire-tampon, le pointeur de grain sauvegardé en lecture SRP conservant l'adresse de l'endroit où est stocké le premier mot du grain. Aussi, si le contrôle de validité s'avère négatif à la fin du grain, c'est-à-dire s'il y a eu une erreur de lecture, le pointeur de grain courant en lecture PRP est repositionné à l'adresse de l'endroit où est stocké le premier mot du grain grâce à l'information que lui fournit le pointeur SRP ce qui permet de relire éventuellement le grain.

Dans le cas où la mémoire-tampon est du type DEPS, il n'est alors plus nécessaire d'avoir quatre pointeurs de grain mais seulement deux qui sont le pointeur de grain courant en écriture PWP et le pointeur de grain sauvegardé en écriture SWP. L'écriture d'un grain est identique à celle décrite précédemment, par contre, lors de la lecture d'un grain, le pointeur courant en lecture qui est en fait le pointeur courant en écriture est décrémenté d'un pas avant chaque lecture d'un mot dans la mémoire-tampon; le pointeur de lecture sauvegardé qui est en fait le pointeur d'écriture sauvegardé conservant l'adresse de l'endroit où est stocké le premier mot du grain ce qui permet éventuellement de relire ce grain dans le cas d'un contrôle de validité négatif.

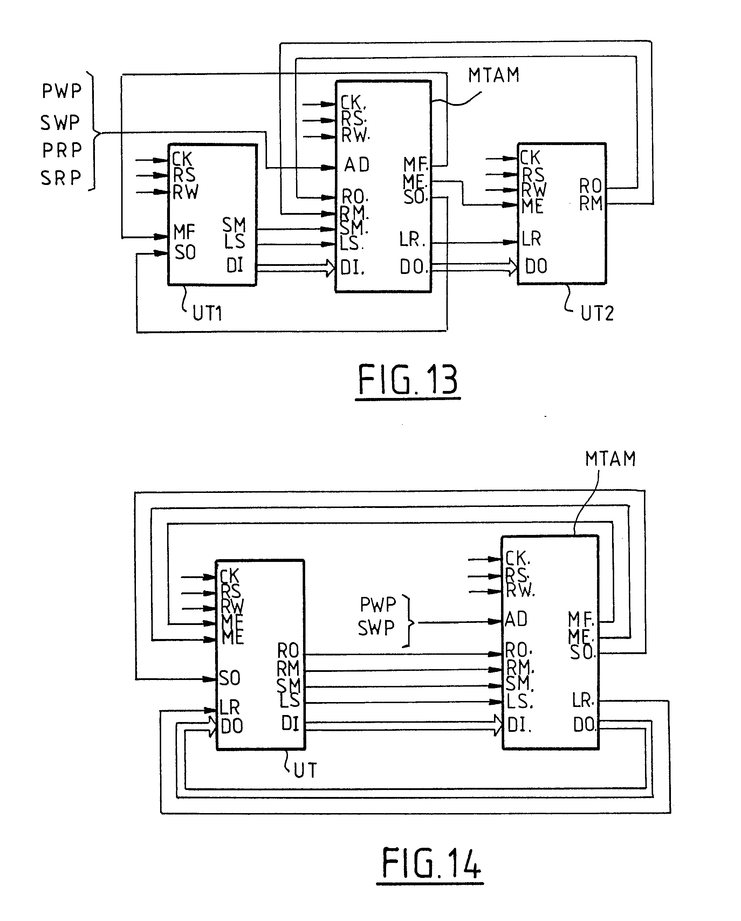

Afin d'illustrer ces principes généraux, il est maintenant fait référence aux figures 13 à 17. La figure 13 représente l'utilisation par deux utilisateurs UT1 et UT2 travaillant respectivement en écriture et en lecture, d'une mémoire-tampon MTAM organisée soit en liste circulaire soit en liste PEPS. Ces deux utilisateurs UT1 et UT2 peuvent être par exemple des mémoires. Les références des différentes bornes représentées sur ces mémoires ont une signification décrite en annexe. Excepté pour les bornes DI, DO et AD, les autres bornes ont des références correspondant aux signaux logiques qu'elles reçoivent.

La figure 14 illustre une configuration dans laquelle la mémoire-tampon MTAM est utilisée en liste DEPS, les références étant identiques à celles de la figure 13. Par contre, on voit ici que les deux utilisateurs UT1 et UT2 n'en font plus qu'un qui peut écrire et lire dans la mémoire-tampon MTAM.

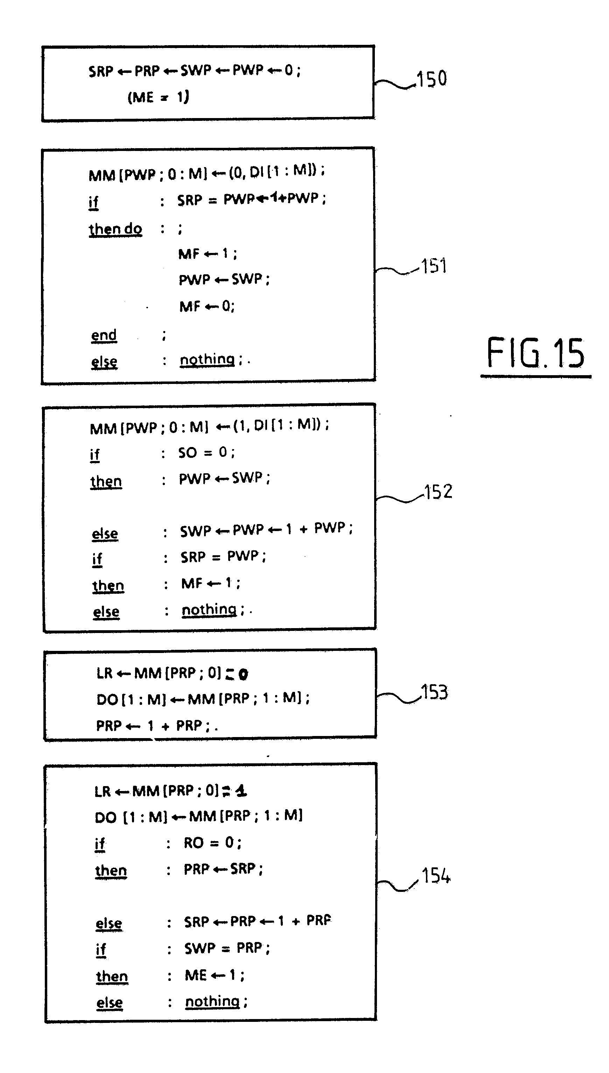

La figure 15 illustre un algorithme de fonctionnement de ce dispositif dans le cas d'une mémoire-tampon organisée en liste PEPS.

Les différentes notations utilisées dans cet algorithme sont expliquées en annexe. L'étape 150 est une étape d'initialisation dans laquelle les quatre pointeurs SRP, PRP, SWP et PWP sont mis à 0, la variable logique ME étant égale à 1 pour signifier l'état "mémoire vide".

L'étape 151 représente l'écriture d'un mot générique et se caractérise donc par la variable logique LS égale à 0 car ce mot n'est pas un mot final de grain. La variable LS représente un bit d'identification du mot générique. Après avoir stocké les m + 1 bits du mot du grain à l'adresse pointée par le pointeur PWP, on teste si les pointeurs SRP et PWP sont égaux après incrémentation du pointeur PWP. Si tel est le cas la valeur 1 est chargée dans la variable MF signifiant que la mémoire est pleine, la valeur du pointeur SWP est chargée dans le pointeur PWP et la valeur 0 est chargée à nouveau dans la variable logique MF signifiant que la mémoire n'est plus pleine. Si tel n'est pas le cas, alors l'écriture de ce mot peut se faire sans problème.

L'étape 152 illustre l'écriture d'un mot final de grain. Dans ce cas la variable logique LS vaut 1. Après avoir stocké les m + 1 bits du mot, y compris l'identification LS, dans la mémoire-tampon à l'adresse indiquée par le tampon PWP, on effectue le contrôle de validité SO. Si SO égale 0, signifiant qu'une erreur de transmission du grain a eu lieu, alors l'adresse du premier mot du grain stockée dans le pointeur SWP est stockée à nouveau dans le pointeur de grain courant en écriture PWP qui sera donc près à recevoir soit le grain suivant, soit à nouveau le grain manquant.

Si le contrôle de validité s'avère correct on incrémente d'un pas le pointeur PWP et l'on stocke cette valeur dans le pointeur SWP. Si la valeur du pointeur PWP est alors égale à la valeur du pointeur SRP ce qui signifie que la mémoire est pleine on charge la valeur 1 dans la variable MF. Si non, rien ne se passe et la mémoire est prête pour un travail suivant.

L'étape 153 illustre la lecture d'un mot générique situé à l'adresse PRP et ayant le bit d'identification valant 0 (LR = 0). On délivre en sortie les m bits du mot situé à l'adresse désignée par le pointeur PRP puis on incrémente ce dernier d'un pas.

L'étape 154 illustre la lecture d'un mot final de grain pour laquelle LR vaut 1. Après avoir délivré en sortie les m bits du mot final, on effectue le contrôle de validité. Si RO = 0 c'est-à-dire s'il y a une erreur de lecture sur tout le grain, alors on se prépare à relire tout le grain en chargeant la valeur du pointeur de lecture sauvegardé SRP dans le pointeur de lecture courant PRP. Si le contrôle de validité est correct, après avoir incrémenté le pointeur de lecture PRP, on charge sa valeur dans le pointeur sauvegardé SRP. On vérifie ensuite que la mémoire-tampon n'est pas vide et si tel était le cas, on charge la valeur 1 dans la variable logique ME.

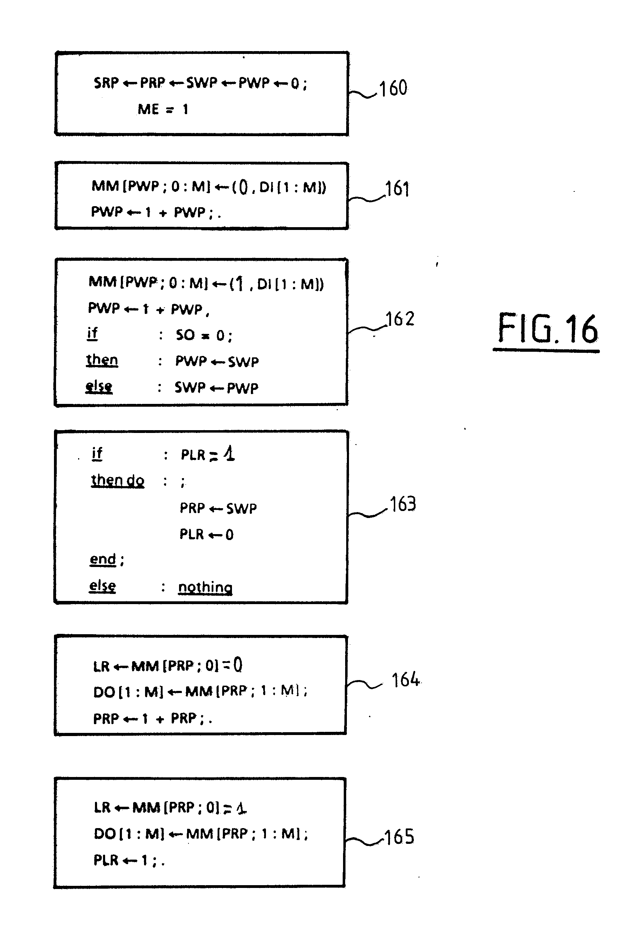

La figure 16 illustre un algorithme de fonctionnement d'une mémoire-tampon organisée en liste circulaire. L'étape 160 est une étape d'initialisation identique à l'étape 150 de la figure 15. L'étape 161 est une écriture générique d'un mot consistant simplement à incrémenter le pointeur PWP après écriture de ce mot.

L'étape 162 est l'écriture d'un mot final de grain consistant simplement à incrémenter le pointeur PWP et à y sto cker la valeur du pointeur SWP dans le cas d'un contrôle négatif. Il n'est pas nécessaire ici de faire un test de mémoire pleine puisque cette mémoire est du type liste circulaire.

L'étape 163 illustre une lecture d'un premier mot d'un grain sachant que précédemment avait été effectuée une lecture d'un mot final de grain. Dans ce cas on utilise un indicateur interne PLR qui signifie lorsqu'il prend la valeur 1 qu'au précédent cycle de lecture le mot lu était un mot final de grain.

L'étape 164 illustre une lecture d'un mot générique de grain identique à l'étape 153 et l'étape 165 illustre une lecture d'un mot final de grain dans laquelle, qu'il y ait erreur ou pas, on n'utilise pas le pointeur SRP.

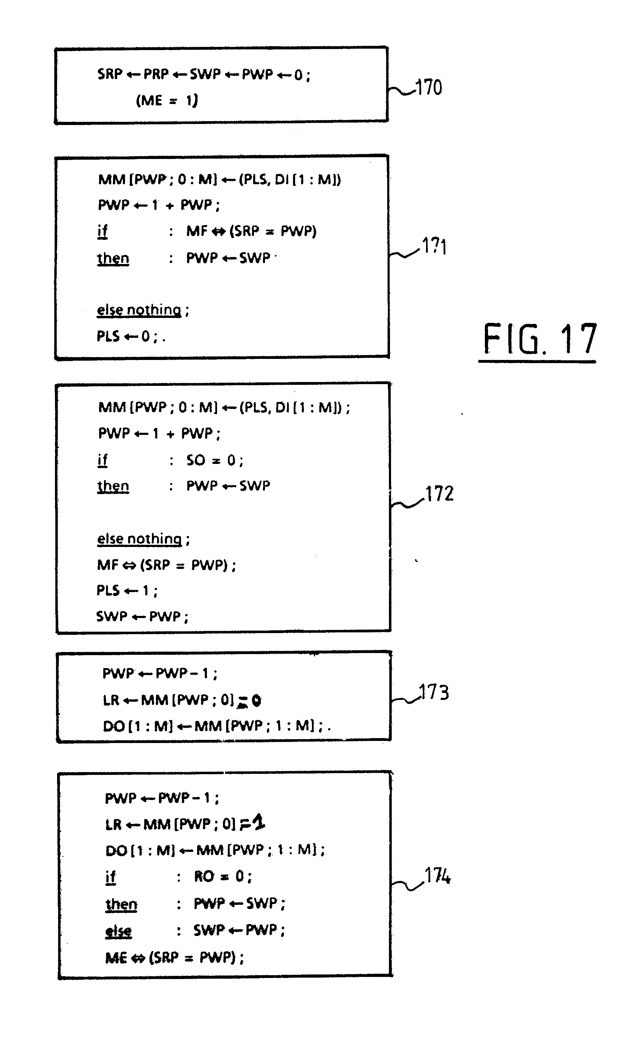

La figure 17 illustre un algorithme de fonctionnement du dispositif utilisant une mémoire-tampon organisée en liste DEPS. Dans cet algorithme, on utilise un indicateur interne PLS qui signifie, lorsqu'il est égal à 1 qu'au précédent cycle d'écriture le mot enregistré était un mot final de grain.

L'étape 170 est une étape d'initialisation analogue à l'étape 150. L'étape 171 est une étape d'écriture d'un mot générique y compris l'écriture du premier mot du grain. Dans cette étape, après avoir stocké les m bits du mot plus le bit d'itentification PLS à l'adresse identifiée par le pointeur PWP, on incrémente ce dernier pointeur. On teste ensuite si la mémoire est pleine et dans ce cas on abandonne l'écriture présente et on se prépare à réécrire le grain en stockant dans le pointeur PWP la valeur du pointeur SWP. Si la mémoire n'est pas pleine on ne fait rien.

L'étape 172 représente une écriture d'un mot final de grain sensiblement identique à l'étape 152 et dans laquelle on vérifie en fin d'étape si la mémoire est pleine.

L'étape 173 est une étape illustrant la lecture d'un mot générique de grain. Cette étape est inversée par rapport à l'étape 153, le pointeur PWP donc PRP étant décrémenté.

L'étape 174 est une étape illustrant la lecture d'un mot final de grain et étant inversée par rapport à l'étape 154 le pointeur PWP étant décrémenté.

L'invention n'est pas limitée au mode de réalisation ci-dessus décrit mais en embrasse toutes les variantes notamment les suivantes :
- les identifications des fragments de la mémoire de travail ne sont pas nécessairement les bits de poids forts des adresses des premiers mots de ces fragments mais peuvent être par exemple un autre type d'indicateur d'adresse dans le cas d'un adressage indirect;
- les fragments peuvent être de tailles différentes;
- les premier REG1 et deuxième REG2 registres de contrôle peuvent être confondus éventuellement puisque chacun contient une information de frontière de liste;
- le choix du deuxième ou du troisième registre de contrôle pour le stockage de l'identification IADTi du fragment de rang i est quelconque. Si l'un des deux est choisi, l'autre le sera pour le stockage de l'identification IADTi + 1 du fragment de rang i + 1.

Bien entendu certains des moyens décrits ci-dessus peuvent être omis dans les variantes où ils ne servent pas. Ainsi, la troisième mémoire auxiliaire MA3 peut ne pas être implantée dans le dispositif si les fragments de la mémoire de travail ne sont utilisés qu'en liste circulaire ou en liste type PEPS.

Annexe.

| | |
|---|---|
| CK : | signal d'horloge |
| DI : | entrée de données |
| DO : | sortie de données |
| LR : | dernier mot lu |
| LS : | dernier mot envoyé en écriture |
| ME : | mémoire vide |
| MF : | mémoire pleine |
| RM : | mémoire lue |
| RO : | lecture correcte |
| RS : | remise à zéro |
| RW : | ordre de lecture-écriture |
| SM : | état de la mémoire |
| SO : | écriture correcte |
| AD : | adresse |
| $DO|1:M|$ : | sortie des M bits d'un mots |
| $DI|1:M|$ : | entrée des M bits d'un mot |
| $MM|i;j|$ : | désigne le j-ème bit du mot contenu dans la mémoire-tampon MTAM ayant pour adresse i |
| $MM|O:M|$ : | désigne les M + 1 bits d'un mot c'est-à-dire le mot entier de M bits plus un bit d'identification de ce mot |
| $MM|PWP;$ $O:M| \leftarrow$ $(O,DI|1:M|)$ : | signifie que le bit d'identification vaut 0 et que l'on stocke les M + 1 bits du mot à l'adresse pointée par le pointeur PWP. |

## Revendications

1. Dispositif de mémoire vive électronique, caractérisé en ce qu'il comprend en combinaison :- une mémoire de travail (MT) subdivisée en N zones ou fragments (Z), ayant respectivement chacun une identification (IADTi),
- une première mémoire auxiliaire (MA1), dite table de vacance, à N cellules (CEL),
- un premier registre d'index (RAD1) propre à désigner respectivement chacune des N cellules, chaque index étant déterminable de façon biunivoque à partir d'une identification (IADTi),
- un pointeur de sortie (PL) et un pointeur d'entrée (PE) parcourant le premier registre (RAD1) suivant une boucle fermée de sens prédéterminé,
- des moyens d'initialisation (MINIT) propres à remplir cette première mémoire auxiliaire (MA1) par la suite d'identifications (IADTi) ainsi qu'à prépositionner les deux pointeurs (PE,PL) sur le même index,
- des moyens d'attribution (MATT) propres à répondre à une requête d'attribution (RDEM) d'un premier ensemble de p fragments en incrémentant séquentiellement de p pas le pointeur de sortie (PL), la sortie (SD1) de la première mémoire auxiliaire (MA1) délivrant séquentiellement les p identifications respectives (IADTi) des p fragments attribués,
- des moyens de chaînage (MCHA) recevant les p identifications et chaînant les p fragments les uns aux autres selon un ordre dépendant de la nature (NATFI) dudit premier ensemble,

- des moyens d'accès (MACC) propres à répondre à une requête d'accès (RACC) à un deuxième ensemble de r fragments chaînés en délivrant successivement selon l'ordre du chaînage les r identifications successives des r fragments,

- des moyens de libération (MLIB) propres à répondre à une requête de libération (RLIB) d'un troisième ensemble de q fragments chaînés, en désignant successivement les q identifications et en autorisant à chaque fois l'écriture de l'identification désignée (IADTi) dans la cellule (CEL) de la première mémoire auxiliaire (MA1) identifiée par l'index correspondant au pointeur d'entrée (PE) et en incrémentant ensuite le pointeur d'entrée (PE) moyennant quoi les contenus des cellules de la première mémoire auxiliaire comprises, suivant ladite boucle, entre le pointeur de sortie inclus et le pointeur d'entrée exclu, désignent l'ensemble des fragments libres de ladite mémoire de travail.

2. Dispositif selon la revendication 1, caractérisé en ce qu'il comprend en outre des moyens de commande (MC) propres à délivrer aux moyens d'attribution (MATT) en réponse à une requête d'attribution (RDEM), un signal de contrôle (1TR) associé au premier fragment du premier ensemble.

3. Dispositif selon la revendication 2, caractérisé en ce que les moyens d'attribution (MATT), délivrent en sortie du dispositif, en réponse audit signal de contrôle (1TR), l'identification (IADT1) du premier fragment du premier ensemble, ce qui permet d'identifier ce premier ensemble.

4. Dispositif selon l'une des revendications 1 à 3, caractérisé en ce que les moyens de chaînage (MCHA) comprennent :

- une deuxième mémoire auxiliaire (MA2) à au moins N emplacements (EMPL),

- un deuxième registre d'index (RAD2) propre à désigner respectivement chacun des N emplacements, et en ce que les moyens d'attribution relient le deuxième registre d'index (RAD2) à la sortie (SD1) de la première mémoire auxiliaire (MA1) et autorisent, à partir du deuxième fragment du premier ensemble le stockage de l'identification (IADTi) du fragment de rang i dans l'emplacement (EMPL) de la deuxième mémoire auxiliaire (MA2) identifié par l'index disponible en sortie du deuxième registre d'index et correspondant à l'identification (IADTi) du fragment de rang i-1.

5. Dispositif selon l'une des revendications 1 à 4, caractérisé en ce que les moyens d'attribution comprennent un organe de comptage (CNTR) propre à délivrer un signal de frontière de liste (FF) associé au dernier fragment du premier ensemble.

6. Dispositif selon les revendications 4 et 5 prises en combinaison, caractérisé en ce que les moyens d'attribution autorisent, en réponse au signal de frontière de liste (FF), le stockage d'une première information de frontière de liste (IFF1) dans l'emplacement de la deuxième mémoire auxiliaire identifié par l'index disponible en sortie du deuxième registre d'index (RAD2) et correspondant à l'identification (IADTp) du dernier fragment du premier ensemble.

7. Dispositif selon la revendication 6, caractérisé en ce que les moyens de chaînage comprennent en outre, un premier registre de contrôle (REG1) possédant ladite information de frontière de liste (IFF1) et en ce que les moyens d'attribution relient la sortie du premier registre de contrôle (REG1) à l'entrée (ED2) de la deuxième mémoire auxiliaire (MA2) en réponse au signal de frontière de liste (FF).

8. Dispositif selon l'une des revendications 6 et 7, caractérisé en ce que le premier ensemble est du type liste circulaire (FC) et en ce que l'information de frontière de liste est l'identification (IADT1) du premier fragment du premier ensemble.

9. Dispositif selon les revendications 7 et 8 prises en combinaison, caractérisé en ce que les moyens d'attribution relient, en réponse au signal de contrôle (1TR), la sortie (SD1) de la première mémoire auxiliaire (MA1) à l'entrée du premier registre de contrôle (REG1) ce qui permet d'y stocker l'identification (IADT1) du premier fragment.

10. Dispositif selon l'une des revendications 6 et 7, caractérisé en ce que le premier ensemble est du type PEPS.

11. Dispositif selon l'une des revendications 1 à 7, caractérisé en ce que le premier ensemble est du type DEPS et en ce que les moyens de chaînage sont propres à effectuer un premier chaînage des p fragments destiné à être utilisé pour un travail d'écriture dans le premier ensemble et un deuxième chaînage des p fragments, inverse du premier chaînage, destiné à être utilisé pour un travail de lecture dans le premier ensemble.

12. Dispositif selon la revendication 11, caractérisé en ce que les moyens de chaînage comprennent, en outre :

- une troisième mémoire auxiliaire (MA3) à au moins N cases (CA),

- un troisième registre d'index (RAD3) propre à désigner respectivement chacune de ces N cases (CA) et en ce que les moyens d'attribution (MATT) relient le troisième registre d'index (RAD3) à la sortie de la première mémoire auxiliaire (MA1) et autorisent à partir du troisième fragment du premier ensemble, le stockage de l'identification du fragment de rang i-2 (IADTi-2) dans la case de la troisième mémoire auxiliaire identifiée par l'index disponible en sortie du troisième registre et correspondant à l'identification (IADTi) du fragment de rang i-1.

13. Dispositif selon les revendications 2 et 12 prises en combinaison, caractérisé en ce que les moyens d'attribution autorisent le stockage d'une deuxième information de frontière de liste (IFF2) dans la case de la troisième mémoire auxiliaire identifiée par l'index correspondant à l'identification (IADT1) du fragment de rang 1.

14. Dispositif selon l'une des revendications 11 à 13 caractérisé en ce que les moyens de chaînage (MCHA) comprennent en outre, un deuxième (REG2) et un troisième (REG3) registres de contrôle et en ce que les moyens d'attribution autorisent, à partir du premier fragment, le stockage de l'identification (IADTi) du fragment de rang i dans l'un (REG3) des deuxième et troisième registres de contrôle et le stockage de l'identification (IADTi+1) du fragment de rang i+1 dans l'autre (REG2) des deuxième et troisième registres de contrôle.

15. Dispositif selon les revendications 13 et 14, prises en combinaison, caractérisé en ce que l'un (REG3) des deuxième et troisième registres de contrôle contient ladite deuxième information de frontière de liste (IFF2).

16. Dispositif selon l'une des revendications 12 à 15, prises en combinaison avec la revendication 5, caractérisé en ce qu'en présence du signal de frontière de liste (FF) les moyens d'attribution autorisent le stockage de l'identification du fragment de rang p-1 dans la case de la troisième mémoire auxiliaire identifié par l'index disponible en sortie du troisième registre d'index et correspondant à l'identification de rang p et en ce que les moyens d'attribution délivrent en sortie du dispositif l'identification du dernier fragment ce qui permet d'identifier ledit premier ensemble lors d'un travail en lecture.

17. Dispositif selon l'une des revendications 12 à 16, caractérisé en ce que le deuxième ensemble comprend les fragments désirés du premier ensemble correspondant, ces fragments désirés étant en un nombre inférieur ou égal à celui des fragments du premier ensemble correspondant, en ce qu'une requête d'accès (RACC) comporte l'identification (DTAC) du dernier fragment de ce deuxième ensemble, et en ce que les moyens d'accès délivrent au troisième registre d'index à partir du dernier fragment de ce deuxième ensemble l'identification du fragment de rang i, la troisième mémoire auxiliaire délivrant alors en sortie du dispositif d'une part, et au troisième registre d'index d'autre part, l'identification du fragment de rang i-1 contenue dans la case identifiée par l'index correspondant à l'identification du fragment de rang i.

18. Dispositif selon l'une des revendications 4 à 17, caractérisé en ce que le deuxième ensemble comprend les fragments désirés du premier ensemble correspondant, ces fragments désirés étant en un nombre inférieur ou égal à celui des fragments du premier ensemble correspondant, en ce qu'une requête d'accès comporte l'identification (1TAC) du premier fragment du deuxième ensemble et en ce que les moyens d'accès délivrent au deuxième registre d'index à partir du premier fragment du deuxième ensemble, l'identification du fragment de rang i, la deuxième mémoire auxiliaire délivrant alors en sortie du dispositif d'une part, et au deuxième registre d'index d'autre part, l'identification du fragment de rang i+1 contenue dans l'emplacement identifié par l'index correspondant à l'identification du fragment de rang i.

19. Dispositif selon l'une des revendications 4 à 18, caractérisé en ce qu'une requête de libération (RLIB) comporte l'identification (1LIB) du premier fragment du troisième ensemble et en ce que les moyens de libération délivrent l'identification du premier fragment au deuxième registre d'index (RAD2) et à la première mémoire auxiliaire, la deuxième mémoire auxiliaire délivrant à partir du deuxième fragment, d'une part au deuxième registre d'index, et d'autre part à la première mémoire auxiliaire, l'identification du fragment de rang i+1 contenue dans l'emplacement identifié par l'index correspondant à l'identification du fragment de rang i.

20. Dispositif selon l'une des revendications précédentes, caractérisé en ce que chaque index (INi) est identique à l'identification correspondante (IADTi).

21. Dispositif selon l'une des revendications précédentes, caractérisé en ce que les fragments sont de même taille.

22. Dispositif selon l'une des revendications précédentes, caractérisé en ce que chaque fragment est constitué d'une pluralité de mots, l'identification (IADTi) du fragment étant l'indicateur d'adresse du premier mot dans la mémoire de travail.

23. Dispositif de mémoire vive selon l'une des revendications précédentes, caractérisé en ce que la mémoire de travail sert de mémoire-tampon (MATM).

24. Dispositif selon la revendication 23, caractérisé en ce qu'il y est effectué au moins une allocation de mémoire choisie pour définir une mémoire-tampon entre un utilisateur (UT1) travaillant en écriture dans la mémoire-tampon et un utilisateur (UT2) travaillant en lecture dans la mémoire-tampon.

25. Dispositif selon la revendication 24, caractérisé en ce qu'il y est effectué une deuxième allocation de mémoire choisie pour permettre un travail en lecture et un travail en écriture simultanés par les deux utilisateurs (UT).

26. Dispositif selon l'une des revendications 24 et 25, caractérisé en ce que ladite(lesdites) allocation(s) de mémoire choisie(s) est(sont) gérée(s) par grains dont chacun fait l'objet d'un contrôle de validité.

27. Dispositif selon la revendication 26, caractérisé en ce qu'il comporte au moins un pointeur de grain courant en écriture (PWP), un pointeur de grain sauvegardé en écriture (SWP) et des moyens (LQ) pour faire progresser ces pointeurs en fonction dudit contrôle de validité du grain en cours.

28. Dispositif selon l'une des revendications 26 et 27, caractérisé en ce que le contrôle de validité est effectué en fin de travail avec le grain.

29. Dispositif selon la revendication 28, caractérisé en ce qu'un grain comprend un nombre prédéterminé de mots, chaque mot comportant un nombre prédéterminé de bits, et en ce que le contrôle de validité consiste à tester la somme de tous les bits du grain.

30. Dispositif selon l'une des revendications 27 à 29, caractérisé en ce qu'un grain comprend un nombre prédéterminé de mots et, en ce que le pointeur de grain courant en écriture (PWP) est incrémenté d'un pas après chaque écriture d'un mot dans la mémoire-tampon (MTAM) ce qui permet de stocker les mots du grain à des endroits contigus de la mémoire-tampon et en ce que le pointeur de grain sauvegardé en écriture (SWP) conserve l'adresse de l'endroit où est stocké le premier mot du grain.

31. Dispositif selon l'une des revendications 27 à 30, caractérisé en ce que la mémoire-tampon est du type liste circulaire ou PEPS et en ce que le dispositif comporte au moins en outre un pointeur de grain courant en lecture (PRP).

32. Dispositif selon la revendication 31, caractérisé en ce que la mémoire-tampon est du type liste PEPS, en ce qu'un grain comprend un nombre prédéterminé de mots, en ce que le Dispositif comporte en outre un pointeur de grain sauvegardé en lecture (SRP), en ce que le pointeur de grain courant en lecture (PRP) est incrémenté d'un pas après chaque lecture d'un mot dans la mémoire-tampon et en ce que le pointeur de grain sauvegardé en lecture (SRP) conserve l'adresse de l'endroit où est stocké le premier mot du grain.

33. Dispositif selon l'une des revendications 27 à 30, caractérisé en ce que la mémoire-tampon est du type DEPS, en ce qu'un grain comprend un nombre prédéterminé de mots et en ce que le pointeur de grain courant en écriture (PWP) est décrémenté d'un pas avant chaque lecture d'un mot dans la mémoire-tampon, le pointeur de grain sauvegardé en écriture (SWP) conservant l'adresse de l'endroit où est stocké le premier mot du grain.

FIG.1

FIG.1A

## FIG.2

FIG.3

EP 0 354 073 A1

FIG.4

FIG.4A

1 TAC

500

RAD 2

502    IADTS

501

Sortie

## FIG.5

DTAC

900

RAD 3

902    IADTP

901

Sortie

## FIG.9

1TLIB

600    601

RAD 2    MA 1

IADTS    +1

604

603    602    PE

## FIG.6

EP 0 354 073 A1

FIG.5A

FIG.6A

FIG.7

## FIG.8

FIG.10A

FIG.10B

FIG.10C

FIG.10D

| IADT6 | IADT2 | IADT1 |
|---|---|---|
| | IADT3 | IADT2 |
| | IADT4 | IADT3 |
| | IADT5 | IADT4 |
| | IADT1 | IADT5 |
| | | IADT6 |
| | | IADT7 |
| | | IADT8 |

## FIG.10E

| IADT6 | IADT2 | IADT1 |
|---|---|---|
| | IADT3 | IADT2 |
| | IADT4 | IADT3 |
| | IADT5 | IADT4 |
| | IADT1 | IADT5 |
| | IADT7 | IADT6 |
| | IFF1 | IADT7 |
| | | IADT8 |

## FIG.10F

PL

IADT8  IADT6
IADT7
IADT2
IADT6  IADT3
IADT5  IADT4

1 2 3 4 5 6 7 8

PE

| IADT6 | IADT2 | IADT1 |
|---|---|---|
| | IADT3 | IADT2 |
| | IADT4 | IADT3 |
| | IADT5 | IADT4 |
| | IADT1 | IADT5 |
| | IADT7 | IADT6 |
| | IFF1 | IADT7 |
| | | IADT8 |

## FIG.10G

PL

IADT8  IADT6
IADT7  IADT7
IADT6  IADT3
IADT5  IADT4

1 2 3 4 5 6 7 8

PE

| IADT2 | IADT1 |
|---|---|
| IADT3 | IADT2 |
| IADT4 | IADT3 |
| IADT5 | IADT4 |
| IADT1 | IADT5 |
| | IADT6 |
| | IADT7 |
| | IADT8 |

## FIG.10H

FIG.10I

FIG.10J

| | IADT 2 | IADT1 |
|---|---|---|
| | IADT 3 | IADT2 |
| | IADT 4 | IADT3 |
| | IADT 5 | IADT4 |
| | IADT 1 | IADT5 |
| | IADT 7 | IADT6 |
| | IADT 8 | IADT7 |
| | IADT 6 | IADT8 |

## FIG.10K

## FIG.11A

## FIG.11B

# FIG.12

FIG.13

FIG.14

```
SRP ← PRP ← SWP ← PWP ← 0 ;
        (ME = 1)
```
— 150

```
MM [PWP ; 0 : M] ← (0, DI [1 : M]) ;
if       :  SRP = PWP ← 1+PWP ;
then do  :  ;
              MF ← 1 ;
              PWP ← SWP ;
              MF ← 0 ;
end      :
else     :  nothing ; .
```
— 151

## FIG. 15

```
MM [PWP ; 0 : M] ← (1, DI [1 : M]) ;
if       :  SO = 0 ;
then     :  PWP ← SWP ;

else     :  SWP ← PWP ← 1 + PWP ;
if       :  SRP = PWP ;
then     :  MF ← 1 ;
else     :  nothing ; .
```
— 152

```
LR ← MM [PRP ; 0] ≈ 0
DO [1 : M] ← MM [PRP ; 1 : M] ;
PRP ← 1 + PRP ; .
```
— 153

```
LR ← MM [PRP ; 0] ≈ 1
DO [1 : M] ← MM [PRP ; 1 : M]
if       :  RO = 0 ;
then     :  PRP ← SRP ;

else     :  SRP ← PRP ← 1 + PRP
if       :  SWP = PRP ;
then     :  ME ← 1 ;
else     :  nothing ;
```
— 154

$$SRP \leftarrow PRP \leftarrow SWP \leftarrow PWP \leftarrow 0 ;$$
$$ME = 1$$

— 160

$$MM [PWP ; 0 : M] \leftarrow (0 , DI [1 : M])$$
$$PWP \leftarrow 1 + PWP ; .$$

— 161

$$MM [PWP ; 0 : M] \leftarrow (1 , DI [1 : M])$$
$$PWP \leftarrow 1 + PWP ,$$

if     : SO = 0 ;

then   : PWP ← SWP

else   : SWP ← PWP

— 162

# FIG.16

if     : PLR = 1

then do : ;

          PRP ← SWP

          PLR ← 0

end ;

else   : nothing

— 163

$$LR \leftarrow MM [PRP ; 0] = 0$$
$$DO [1 : M] \leftarrow MM [PRP ; 1 : M] ;$$
$$PRP \leftarrow 1 + PRP ; .$$

— 164

$$LR \leftarrow MM [PRP ; 0] = 1$$
$$DO [1 : M] \leftarrow MM [PRP ; 1 : M] ;$$
$$PLR \leftarrow 1 ; .$$

— 165

```
SRP ← PRP ← SWP ← PWP ← 0 ;
        (ME = 1)
```

$\sim$ 170

```
MM [PWP ; 0 : M] ← (PLS, DI [1 : M])
PWP ← 1 + PWP ;
if          : MF ↔ (SRP = PWP)
then        : PWP ← SWP

else nothing ;
PLS ← 0 ; .
```

$\sim$ 171

# FIG. 17

```
MM [PWP ; 0 : M] ← (PLS, DI [1 : M]) ;
PWP ← 1 + PWP ;
if          : SO = 0 ;
then        : PWP ← SWP

else nothing ;
MF ↔ (SRP = PWP) ;
PLS ← 1 ;
SWP ← PWP ;
```

$\sim$ 172

```
PWP ← PWP – 1 ;
LR ← MM [PWP ; 0] ≝ 0
DO [1 : M] ← MM [PWP ; 1 : M] ; .
```

$\sim$ 173

```
PWP ← PWP – 1 ;
LR ← MM [PWP ; 0] ≝ 1
DO [1 : M] ← MM [PWP ; 1 : M] ;
if          : RO = 0 ;
then        : PWP ← SWP ;
else        : SWP ← PWP ;
ME ↔ (SRP = PWP) ;
```

$\sim$ 174

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 153 877  (FUJITSU LTD)<br>* Figures 9,12; page 1, ligne 1 - page 3, ligne 12; page 21, ligne 17 - page 23, ligne 30; page 25, ligne 18 - page 27, ligne 20 *<br>--- | 1-33 | |
| A | US-A-4 065 810  (C.E. CRAMER)<br>* Colonne 1, ligne 31 - colonne 2, ligne 23; colonne 4, lignes 45-65 *<br>--- | 1-33 | |
| A | EP-A-0 088 840  (HONEYWELL INFORMATION SYSTEMS INC.)<br>* Page 2, ligne 16 - page 3, ligne 10; page 16, ligne 17 - page 4, ligne 6 *<br>--- | 1-33 | |
| A | A.S. TANENBAUM: "Operating systems: Design and implementation", 1987, pages 200-226, Prentice-Hall International, Inc., Englewood Cliffs, US<br>----- | | |

**DOMAINES TECHNIQUES RECHERCHES (Int. Cl.5)**

G 06 F

Le présent rapport a été établi pour toutes les revendications

| Lieu de la recherche | Date d'achèvement de la recherche | Examinateur |
|---|---|---|
| LA HAYE | 06-09-1989 | DE LA FUENTE DEL AGUA Y. |